# EUROPÄISCHE PATENTANMELDUNG

(11) **EP 4 202 632 A1**
(43) Veröffentlichungstag der Anmeldung: **28.06.2023**
(21) Anmeldenummer: 22215728.1
(22) Anmeldetag: 22.12.2022
(51) Int. Cl.: G06F 3/12

(54) **VERFAHREN ZUR HERSTELLUNG EINES DRUCKPRODUKTS**

(30) Priorität: 23.12.2021 DE 102021134455; 18.10.2022 EP 22202109
(71) Anmelder: Drechsel Organisation GmbH, 82362 Weilheim i. OB (DE)
(72) Erfinder: DRECHSEL, Reinhard, 82362 Weilheim i.OB (DE); DRECHSEL, Raphaela, 85276 Pfaffenhofen (Ilm) (DE)
(74) Vertreter: Herrmann, Uwe

(57) **Zusammenfassung**

Die vorliegende Erfindung betrifft ein Verfahren zur Herstellung eines Druckprodukts in unternehmensübergreifender Zusammenarbeit zwischen Auftraggeber oder Auftraggebern und Druckerei oder Druckereien mit folgenden Verfahrensschritten:
• Zuordnen von Informationen und/oder Inhalten durch den Auftraggeber in eine abstrakte Datenstruktur, welche mindestens eine Strukturebene mit mindestens einem Strukturelement umfasst;
• Umwandeln der strukturierten Druckproduktdaten in der Druckerei oder den Druckereien in ein Datenformat das von dem dort eingesetzten operativen IT System in Fertigungsaufträge zur Herstellung umgesetzt werden kann;
• Nachbearbeiten des Herstellungsweges des Druckprodukts in textlich beschriebenen Sonderfällen.

## Beschreibung

Die vorliegende Erfindung betrifft ein computerimplementiertes Verfahren zur Herstellung eines Druckprodukts in unternehmensübergreifender Zusammenarbeit zwischen Auftraggeber oder Auftraggebern und Druckerei oder Druckereien mit folgenden Verfahrensschritten:
a) Zuordnen von Informationen und/oder Inhalten durch den Auftraggeber in eine abstrakte Datenstruktur, welche mindestens eine Strukturebene mit mindestens einem Strukturelement umfasst, mittels einer Zuordnungseinheit einer ersten Steuerungseinheit;
b) Speichern auf einem Datenträger und/oder Versenden mittels elektronischer Kommunikationsmittel der mit der abstrakten Datenstruktur verknüpften Informationen und/oder Inhalte und der abstrakten Datenstruktur an eine oder mehrere Druckereien, wodurch strukturierte Druckproduktdaten bezüglich der gewünschten Endprodukte entstehen bzw. zur Verfügung gestellt werden;
c) Umwandeln der strukturierten Druckproduktdaten mittels einer Umwandlungseinheit einer zweiten Steuerungseinheit in der Druckerei oder den Druckereien in ein Datenformat, das von dem dort eingesetzten operativen IT System in Fertigungsaufträge zur Herstellung umgesetzt werden kann, wobei die Umwandlungseinheit dazu ausgelegt ist, vorzugsweise automatisch das Datenformat zu erfassen;
d) Bewertung der gelesenen Druckproduktdaten mittels einer Bewertungseinheit der zweiten Steuerungseinheit vorzugsweise in dem IT System und Zuordnung zu den herstellenden Druckmaschinen bzw. zur Beschaffung der zur Herstellung erforderlichen Einsatzmaterialien mittels einer Zuordnungseinheit der zweiten Steuerungseinheit;
e) Vorzugsweise Nachbearbeiten des Herstellungsweges des Druckprodukts in textlich beschriebenen Sonderfällen, vorzugsweise mittels einer Eingabeeinheit der zweiten Steuerungseinheit
f) wobei die Informationen und/oder Inhalte mit dem jeweils passenden Strukturelement verknüpft werden, sodass
g) die strukturierten Druckproduktdaten die für die technische Beschreibung des Druckprodukts in der Regel notwendigen Informationen und/oder Inhalte umfassen und
h) die ordnungsgemäße Übernahme an den Auftraggeber bestätigt wird durch Rückübertragung dieser Informationen und/oder Inhalte mittels einer der zweiten Steuerungseinheit zugehörigen Kommunikationseinheit.

Die abstrakte Datenstruktur enthält vorzugsweise Strukturelemente, die ein Druckprodukt ohne direkten Bezug zur Herstellung beschreiben und die abstrakte Datenstruktur eine Mehrzahl von Druckproduktarten abbildet.

Ein erfindungsgemäßes verfahren umfasst vorzugsweise weiterhin die Schritte:
j) Übersenden eines Steuerungsbefehls auf der Grundlage der strukturierten Druckproduktdaten an die Druckmaschine durch die zweite Steuerungseinheit, und
k) Drucken eines Druckprodukts durch die Druckmaschine entsprechend des von der zweiten Steuerungseinheit empfangenen Steuerungsbefehls.

Auftraggeber sind z.B. Verlage für Zeitschriften. Druckereien umfassen auch sonstige Produzenten, Bindereien oder Produktionsagenturen.

Operative IT-Systeme sind i.d.R. MIS = Management Informations-Systeme, Branchenlösung Druckerei.

Einsatzmaterial ist z.B. Papier.

Nach dem Stand der Technik werden Druckprodukte, zum Beispiel (z.B.) Bücher, Zeitschriften, Prospekte, Kataloge, Etiketten, Verpackungen, et cetera (etc.), über folgende Bestellwege bestellt:
- laut Muster als unveränderter Nachdruck;
- als wörtliche Beschreibung des gewünschten Produkts;
- laut Preisliste bei einfachen Produkten zum Beispiel bei Online-Druckereien. Vor allem Produkte wie Briefbogen, Visitenkarten, etc. werden auf diese Weise von der Druckerei fix vorgegebenen Mengen bestellt.

Eine Herstellung eines bestellten Druckprodukts, ohne weitere Kommunikation mit dem Besteller beziehungsweise (bzw.) Auftraggeber bzw. Kunde, ist nach dem Stand der Technik nur bei sehr einfachen Produkten, die komplett in einer einfachen Datenstruktur beschrieben werden können oder bei einem identischen Nachdruck möglich.

In allen anderen Fällen muss das Produkt erst von einem Druckfachmann in der Druckerei in herstellbare Einheiten zergliedert und diese wieder zusammenmontiert bzw. gebunden werden.

Dabei ergeben sich oftmals größere Änderungen in der Struktur bzw. im Layout des Druckprodukts, die wiederum vom Besteller abgenommen werden müssen. Bei nochmaligen Änderungswünschen ergibt sich ein iterativer Prozess, der die Herstellung des Druckprodukts verzögert und verteuert.

Dieser iterative Prozess ist auf Grund seiner Komplexität und mangelnden Strukturierung bis jetzt nicht automatisierungsfähig und ein wesentlicher Grund dafür, dass vor allem kleinere Druckereien nicht mehr wettbewerbsfähig sind und nur sehr begrenzte Vorteile durch die Digitalisierung erlangen, obwohl die Daten für alle zu druckenden Inhalte, wie Bilder, Texte, etc. schon digital vorliegen.

Standardprodukte werden von Online-Druckereien angeboten, können aber nicht, z.B. für Kataloge, Zeitschriften, Ausgaben, etc. genügend individualisiert werden.

Es können in diesen Fällen lediglich einfache Platzhalter mit Inhalten, wie Bildern oder Texten befüllt und fix vordefinierte Produktstrukturen genutzt werden.

Es existieren für einfache Produktarten, somit Datenstrukturen, die durch Inhalte sehr begrenzt individualisiert werden können.

Für komplexe Druckprodukt, z.B. in den Bereichen kommerzieller Druck, Verpackung und Etiketten gibt es noch keine derartigen umfassenden Datenstrukturen.

Einzelne Softwarelösungen für Branchensoftware für Druckereien, wie z.B. so genannte Management-Informations-Systeme (MIS), haben jeweils eigene Datenstrukturen.

Diese eigenen Datenstrukturen sind nicht umfassend im Hinblick auf ganze Produkte und Projekte und auch nicht übertragbar auf anderer Druckereien, die mit anderen Softwarelösungen arbeiten. Die Kompatibilität der einzelnen Softwareprogramme ist nicht gegeben. Beispielsweise muss Druckerei A bei Bestellung einer Teilleistung bei Druckerei B mit einer anderen Software das Druckprodukt z.B. wörtlich beschreiben. In Druckerei B muss das Produkt sodann nochmals von einem Druckfachmann in der Druckerei in herstellbare Einheiten zergliedert und wieder zusammenmontiert bzw. gebunden werden. Die Automatisierung beschränkt sich derzeit auf Email-Versand der textlichen Produktbeschreibung statt klassischer Briefpost.

Eine mittlere Druckerei hat ca. 2.000 relevante Aufträge pro Jahr mit einem durchschnittlichen Rohertrag von 3.000 EUR. Große Druckereien haben ca. 10.000 Aufträge pro Jahr. mit jeweils 25.000 EUR Rohertrag. Die Auftragsbearbeitungskosten liegen zwischen 20 %, für große Aufträge und 30 % des Rohertrags. Mit einer Verbesserung der Prozesse könnte der Aufwand halbiert werden.

Vor diesem Hintergrund liegt der vorliegenden Erfindung die Aufgabe zugrunde, die Herstellung eines Druckprodukts über den gesamten Produktionsprozess von der Bestellung bis zur Auslieferung zu optimieren.

Diese Aufgabe wird durch das Verfahren mit den Merkmalen des unabhängigen Anspruchs 1 gelöst. Vorteilhafte Weiterbildungen der Erfindung sind Gegenstand der abhängigen Ansprüche.

Beispielsweise kann erfindungsgemäß vorgesehen sein: Ein Verfahren zur Herstellung eines Druckprodukts mit folgenden Verfahrensschritten:
a) Zuordnen von Informationen und/oder Inhalten durch einen Auftraggeber in eine abstrakte Datenstruktur, welche mindestens eine Strukturebene mit mindestens einem Strukturelement umfasst;
b) Speichern auf einem Datenträger und/oder Versenden mittels elektronischer Kommunikationsmittel der mit der abstrakten Datenstruktur verknüpften Informationen und/oder Inhalte und der abstrakten Datenstruktur an eine oder mehrere Druckereien, wodurch strukturierte Druckdaten bezüglich der gewünschten Endprodukte entstehen oder zur Verfügung gestellt werden;
c) Umwandeln der strukturierten Druckproduktdaten in der Druckerei oder den Druckereien in ein Datenformat das von dem dort eingesetzten operativen IT System in Fertigungsaufträge zur Herstellung umgesetzt werden kann;
d) Bewertung der gelesenen Druckproduktdaten in dem IT System und Zuordnung zu den herstellenden Druckmaschinen und/oder zur Beschaffung der zur Herstellung erforderlichen Einsatzmaterialien;
e) Nachbearbeiten des Herstellungsweges des Druckprodukts in textlich beschriebenen Sonderfällen,
f) wobei die Informationen und/oder Inhalte mit dem jeweils passenden Strukturelement verknüpft werden, sodass
g) die strukturierten Druckproduktdaten die für die technische Beschreibung des Druckprodukts in der Regel notwendigen Informationen und/oder Inhalte umfassen und
h) die ordnungsgemäße Übernahme an den Auftraggeber bestätigt wird durch Rückübertragung dieser Informationen und/oder Inhalte,
i) wobei die abstrakte Datenstruktur Strukturelemente enthält, die ein Druckprodukt ohne direkten Bezug zur Herstellung beschreiben und die abstrakte Datenstruktur eine Mehrzahl von Druckproduktarten abbildet.

Die Formulierung, dass der abstrakten Datenstruktur Informationen und/oder Inhalte zugeordnet werden, umfasst die Bedeutung, dass die abstrakte Datenstruktur Informationen und/oder Inhalte beschreibt oder definiert oder referenziert oder dergleichen.

Es ist denkbar, dass das Umwandeln der strukturierten Druckproduktdaten in ein für die digitale Druckmaschine oder im Falle analogen Drucks, für das digitale Vorstufensystem zur Druckformherstellung lesbares Datenformat, wodurch lesbare Druckproduktdaten entstehen, in einer Druckerei auf einem so genannten Zielsystem stattfindet.

Die mit der abstrakten Datenstruktur verknüpften Informationen und/oder Inhalte, die strukturierten Druckdaten und die lesbaren Druckdaten umfassen vorzugsweise denselben Gehalt an Informationen und liegen nur in anderen Datenformaten vor.

Die mit der abstrakten Datenstruktur verknüpften Informationen und/oder Inhalte und die strukturierten Druckdaten bestehen vorzugsweise aus demselben Gehalt an Informationen und die lesbaren Druckdaten können darüberhinausgehende Informationsgehalt umfassen.

Verknüpfen kann so verstanden werden, dass Informationen und/oder Inhalte mit auf das entsprechende Strukturelement referenziert werden. Dies kann bedeuten, dass dem Strukturelement etwa ein Verweis auf eine Datei oder auf sonstige Informationen und/oder Inhalte beigegeben wird. So ist es denkbar, dass das Strukturelement eine Tabellenzelle ist, in die entsprechende Verweise oder Informationen und/oder Inhalte eingetragen werden.

Strukturelemente, die ein Druckprodukt ohne direkten Bezug zur Herstellung des Druckprodukts beschreiben sind vorzugsweise solche, die für das reine Herstellen, also Drucken, Heften, etc. des Druckprodukts nicht notwendigerweise mit Informationen und/oder Inhalten verknüpft werden müssen.

Druckproduktart ist vorzugsweise eine abstrakte Umschreibung für ein Druckprodukt. Bücher, Zeitschriften, Prospekte, Kataloge, Etiketten, Verpackungen, etc. sind Druckproduktarten. Ein spezifisches Buch, eine spezifische Zeitschrift, etc. ist das Druckprodukt.

Mit der abstrakten Datenstruktur können also alle zur Herstellung eines Druckprodukts notwendigen Informationen und/oder Inhalte verknüpft werden und es können über die zur Herstellung notwendigen Informationen und/oder Inhalte hinausgehende Informationen und/oder Inhalte verknüpft werden, wobei die Datenstruktur dermaßen abstrakt ist, dass sich mit ihr eine Mehrzahl von Druckproduktarten beschreiben lässt.

Vorzugsweise ist vorgesehen, dass die abstrakte Datenstruktur mindestens eine Projektebene und/oder Druckproduktebene oder Ausgabenebene und/oder Druckversionsebene und/oder Druckproduktteilebene und/oder Druckproduktseitenebene und/oder Druckproduktausstattungsebene und/oder Druckproduktfertigerzeugnisebene und/oder Versandebene als Strukturebene und mindestens ein Element je Ebene umfasst. Eine derartige abstrakte Datenstruktur wird vorzugsweise von der Zuordnungseinheit der ersten Steuerungseinheit erzeugt.

Die abstrakte Datenstruktur kann somit eine hierarchisch aufgebaute Struktur mit verschiedenen logischen Ebenen sein unter denen sich wiederum andere logische Ebenen befinden können. Unter den Ebenen können jeweils Elemente gruppiert sein. Bestimmte Gruppen von Elementen können abhängig von der Druckproduktart nur in bestimmten Druckproduktarten erforderlich und damit vorhanden sein, in anderen nicht.

Druckprodukt und Produkt sind im Rahmen dieser Erfindung vorzugsweise synonym zu verstehen.

Denkbar ist, dass das Umwandeln der strukturierten Druckproduktdaten in ein für die digitale Druckmaschine oder im Falle analogen Drucks, in ein für das digitale Vorstufensystem zur Druckformherstellung lesbares Datenformat mittels der Umwandlungseinheit der zweiten Steuerungseinheit teilautomatisch erfolgt.

Teilautomatisch bedeutet, dass bei der Umwandlung, die automatisch erfolgen kann, auch manuelle Eingriffe möglich sind.

Die Zuordnungseinheit der ersten Steuerungseinheit kann dazu ausgelegt sein, eine abstrakte Datenstruktur zu erzeugen, bei welcher eine erste Druckversionsebene unabhängig von einer zweiten Druckversionsebene ist.

Vorzugsweise ist vorgesehen, dass eine Druckversion unabhängig von einer zweiten Druckversion ist.

Eine Druckversion kann somit verändert werden, ohne dass die andere Druckversion mitverändert wird. Hierarchisch sind die Druckversionen daher vorzugsweise auf derselben Hierarchieebene.

In einer denkbaren Ausführungsform ist vorgesehen, dass vor dem Einlesen der Druckdaten und Drucken des Druckprodukts mit der Druckmaschine die Verfahrensschritte a) bis d) und h) oder a) bis e) und h) mehrfach durchlaufen werden.

Damit wird ein Änderungsprozess möglich, bei dem die ursprünglich gespeicherten und/oder versendeten strukturierten Druckdaten abgeändert oder durch neue ersetzt werden können.

Zudem können vor dem Übersenden des Steuerungsbefehls in Schritt j) und Drucken des Druckprodukts mit der Druckmaschine in Schritt k) die Verfahrensschritte a) bis d) und h) oder a) bis e) und h) mehrfach durchlaufen werden.

Denkbar ist, dass in der abstrakten Datenstruktur die Verknüpfung einer Ausstattung mit einem Fertigerzeugnis oder auslieferfähigen Produkt und einer paginierten Seite möglich ist.

Die Zuordnungseinheit der ersten Steuerungseinheit kann ausgelegt sein, eine abstrakte Datenstruktur zu erzeugen, in welcher eine Ausstattung mit einem Fertigerzeugnis oder auslieferfähigen Produkt und einer paginierten Seite verknüpft ist.

Eine Ausstattung in einem Druckprodukt ist beispielsweise eine Zugabe zu den auf den Seiten gedruckten Inhalten des Druckprodukts. Diese kann z.B. in einer eingeklebten Postkarte, in einer Warenprobe oder in einem Gimmick bestehen.

Denkbar ist auch, dass gemeinsame Bestandteile von Druckversionen definiert werden.

Die gemeinsamen Bestandteile können als Gleichteile oder Druckproduktgleichteile bezeichnet werden. Denkbar ist zum Beispiel, dass eine Zeitung für ein Gebiet einen allgemeinen Teil besitzt und für in diesem Gebiet gelegene Regionen abgeänderte regionale Teile. Die regionalen Ausgaben wären dann Druckversionen mit dem allgemeinen Teil als Gleichteil. Gleichteile müssen sich dabei nicht auf Seiten beziehen, sondern können auch nur auf Informationen und/oder Inhalte beschränkt sein. So hat jede regionale Ausgabe einer Zeitung z.B. eine andere Titelseite, wobei sich nur die Überschrift und das Inhaltsverzeichnis unterscheiden können. Der Leitartikel auf der Titelseite kann bei jeder regionalen Ausgabe derselbe sein. Oder die österreichische Ausgabe einer Zeitschrift hat denselben Inhaltsteil wie die bundesdeutsche Ausgabe, aber einen abweichenden Umschlag mit österreichischen Verkaufspreisen statt bundesdeutschen.

Vorzugsweise ist vorgesehen, dass Werkzeugdaten mit der abstrakten Datenstruktur verknüpft werden.

Die Zuordnungseinheit der ersten Steuerungseinheit kann dazu ausgelegt sein, eine abstrakte Datenstruktur zu erzeugen, in welcher gemeinsame Bestandteile von Druckversionen eines Druckprodukts definiert sind.

Werkzeuge sind z.B. Stanzwerkzeuge oder Prägewerkzeuge für Blindenschrift, etc.

Es ist denkbar, dass der Bedruckstoff unabhängig von den sonstigen Elementen der abstrakten Datenstruktur definiert wird.

Die Erfindung betrifft auch ein Druckprodukt, dass über ein erfindungsgemäßes Verfahren hergestellt ist.

Die Erfindung betrifft des Weiteren eine digitale Druckmaschine oder im Falle analogen Drucks, ein digitales Vorstufensystem zur Druckformherstellung, die oder das mit einem erfindungsgemäßen Verfahren betreibbar ist oder betrieben wird.

91n anderen Worten betrifft die Erfindung weiterhin eine digitale Druckmaschine oder im Falle analogen Drucks, digitales Vorstufen-system zur Druckformherstellung, die oder das dazu ausgelegt ist, mit einem erfindungsgemäßen Verfahren betrieben zu werden und eine Kommunikationseinheit aufweist, welche dazu ausgelegt ist, mit der zweiten Steuereinheit gemäß einem der vorhergehenden Ansprüche zusammenzuwirken.

Die Erfindung betrifft auch ein System umfassend:
- ein erstes elektronisches Kommunikationsmittel;
- ein zweites elektronisches Kommunikationsmittel;
- eine Schnittstelle zwischen dem zweiten elektronischen Kommunikationsmittel und einer digitalen Druckmaschine oder im Falle analogen Drucks, dem digitalen Vorstufensystem zur Druckformherstellung,

wobei das zweite Kommunikationsmittel strukturierte Druckdaten von dem ersten Kommunikationsmittel empfangen kann und
die Schnittstelle die empfangenen oder aus den empfangenen Daten gewonnenen strukturierten Druckproduktdaten in für die digitale Druckmaschine oder im Falle analogen Drucks, in für das digitale Vorstufensystem zur Druckformherstellung oder für das diese Anlagen ansteuernde IT System der Druckerei lesbare Druckproduktdaten umwandelt und die Daten an die digitale Druckmaschine oder im Falle analogen Drucks, an das digitale Vorstufensystem zur Druckformherstellung oder an das diese Anlagen ansteuernde IT System der Druckerei sendet.

Weiterhin betrifft die vorliegende Erfindung ein System zur Herstellung eines Druckprodukts gemäß einem erfindungsgemäßen Verfahren, umfassend:
- die erste Steuerungseinheit, welcher ein erstes elektronisches Kommunikationsmittel zugeordnet ist;
- die zweite Steuerungseinheit, welcher ein zweites elektronisches Kommunikationsmittel zugeordnet ist; und
- eine Schnittstelle zwischen dem zweiten elektronischen Kommunikationsmittel und einer digitalen Druckmaschine oder einem digitalen Vorstufensystem zur Druckformherstellung nach Anspruch 9,

wobei die Schnittstelle dazu konfiguriert ist, die empfangenen oder aus den empfangenen Daten gewonnenen strukturierten Druckproduktdaten in für die digitale Druckmaschine oder im Falle analogen Drucks, in für das digitale Vorstufensystem zur Druckformherstellung oder für das diese Anlagen ansteuernde IT System der Druckerei lesbare Druckproduktdaten umzuwandeln und weiterhin dazu konfiguriert ist,
die lesbaren Druckproduktdaten an die digitale Druckmaschine oder im Falle analogen Drucks, an das digitale Vorstufensystem zur Druckformherstellung oder an das diese Anlagen ansteuernde IT System der Druckerei zu übersenden.

Vorzugsweise weist die erste Steuerungseinheit eine Zuordnungseinheit auf, welche dazu ausgelegt ist, Informationen und/oder Inhalte von einem Auftraggeber einer abstrakten Datenstruktur zuzuordnen.

Vorzugweise ist die zweite Steuerungseinheit dazu ausgelegt, die strukturierten Druckdaten teilautomatisch oder vollautomatisch in ein für die digitale Druckmaschine oder im Falle analogen Drucks, in ein für das digitale Vorstufensystem zur Druckformherstellung lesbares Datenformat umzuwandeln und einen Steuerungsbefehl auf der Grund-lage der strukturierten Druckproduktdaten an die Druckmaschine zu übersenden.

Ganz allgemein formuliert weist ein erfindungsgemäßes System vorzugsweise mindestens eine Steuerungseinheit auf, welche dazu programmiert, einen oder mehrere der Schritte eines erfindungsgemäßen Verfahrens auszuführen. Ein erfindungsgemäßes System kann die erste und / oder die zweite Steuerungseinheit aufweisen, welche in der vorliegenden Offenbarung im Kontext eines erfindungsgemäßen Verfahrens eingehend beschrieben ist.

Vorzugsweise ist die abstrakte Datenstruktur nicht an eine bestimmte Druckproduktart angepasst.

Vorzugsweise ist die abstrakte Datenstruktur nicht auf eine bestimmte Druckmaschine oder ein bestimmtes Druckverfahren oder einen bestimmten Maschinenpark angepasst.

Vorzugsweise setzt die abstrakte Datenstruktur keinen Zugriff oder keine Einbindung der Daten oder Inhalte der einzelnen Seiten und keine bestimmte Maschinenausstattung voraus.

Vorzugsweise erfolgt die Umsetzung der abstrakten Datenstruktur bzw. die Umwandlung der strukturierten Druckdaten unter Berücksichtigung der Herstellmöglichkeiten des Zielbetriebs bzw. der Druckerei. Die Umwandlung der der strukturierten Druckdaten erfolgt vorzugsweise im MIS- oder Enterprise Resource Planning (ERP)-System der Druckerei. Die Prüfung und Zuordnung der Informationen, Daten, insbesondere im PDF-Format und Inhalte erfolgt vorzugsweise im Prepress-Workflow-System der Druckerei. Dadurch ist die abstrakte Datenstruktur vorzugsweise neutral hinsichtlich der maschinen- und softwaretechnischen Ausstattung der Druckerei.

Es ist denkbar, dass eine Zusammenarbeit mehrerer Software-Teillösungen bei der Umwandlung der strukturierten Druckdaten erfolgt.

Vorzugsweise erfolgt keine direkte Maschinenzuordnung bzw. Druckmaschinenzuordnung in der abstrakten Datenstruktur. Denkbar ist, dass der abstrakten Datenstruktur keine Informationen über Arbeitsgänge und/oder Maschinenausstattungen zuordenbar ist.

Vorteilhaft ist die Einsparung an Kosten und Durchlaufzeit. Vorzugsweise werden ca. 50 % der Overhead Kosten eingespart.

Vorzugsweise wird das Verfahren bei der Herstellung von komplexen Katalogen und Zeitschriften, Visitenkarten/Briefbogen oder Haftetiketten bzw. Selbstklebeetiketten und Verpackungen, z.B. für Arzneimittel, Kosmetika, Lebensmittel, etc. eingesetzt. Vorzugsweise wird das Verfahren nicht für Außenverpackungen für Paketversender, etwa so genannte braune Wellpappen, eingesetzt, da diese meistens nicht bedruckt sind.

In einer möglichen Ausführungsform wird die abstrakte Datenstruktur so definiert, dass der Besteller das gewünschte Druckprodukt so beschreibt, dass die Druckerei alle notwendigen Informationen für die Herstellung dieses Druckprodukts erhält. Beispielsweise könnte als Besteller ein Verlag, der eine Zeitschrift herstellen möchte, bei der jede Ausgabe etwas anders aussieht, fungieren. Die Ausgaben können sich beispielsweise in der Seitenzahl, den Beilagen, etc. unterscheiden.

Beispielsweise durch eine Software der Druckerei wird die abstrakte Datenstruktur vorzugsweise in der Weise in die internen Tabellen umgesetzt, dass die zu fertigenden Bestandteile den Druckmaschinen zugeordnet, ihre Kosten berechnet, das Material bestellt und die Arbeitsgänge in der Fertigung terminiert werden.

Der Durchlauf ist dadurch schneller, weil weniger knappe Mitarbeiterzeit mit unproduktivem Umsetzen einer nicht standardisierten Beschreibung des Druckprodukts verschwendet wird und stattdessen sofort mit der Produktion begonnen werden kann. Übertragungsfehler bei der Übertragung der strukturierten Druckdaten werden vorzugsweise ausgeschlossen.

Der laufende Betrieb des Verfahrens ist vorzugsweise nahezu kostenlos bzw. innerhalb der IT weitestgehend automatisiert.

Denkbar ist, dass der Besteller, Kunde oder Auftraggeber entweder ohne Mehrkosten einen Web-Client aus dem Web-Shop der Druckerei zur Verfügung gestellt bekommt oder das entsprechende ERP-System um einen entsprechenden Konfigurator erweitert wird.

Damit kann nicht nur der Bestellfall, bei dem Daten an nur eine Druckerei gesendet werden, abgebildet werden, sondern auch Ausschreibungen oder Anfragen an mehrere Druckereien.

Vorzugsweise fallen für die Besteller, Kunden oder Auftraggeber keine zusätzlichen Kosten an. Ihre Vorteile liegen in der besseren Transparenz, zeitlichen Flexibilität und besseren Änderbarkeit der Produkte während der Herstellung. So werden z.B. Geschäftsberichte wegen des Termindrucks noch während der Herstellung in Teilen verändert. Dies kann vorteilshaft automatisiert ablaufen. Denkbar ist, dass während des Verfahrens erkennbar ist, welche Teile schon gedruckt und welche noch änderbar sind.

In anderen Worten ist vorzugsweise eine abstrakte Datenstruktur zur technischen Beschreibung eines beliebigen Druckprodukts vorgesehen. Mit dieser abstrakten Datenstruktur können Auftraggeber, z.B. Verlage oder Einkaufsabteilungen genau und strukturiert definieren, wie das gewünschte Druckprodukt aussehen soll. Die Druckerei kann diese Daten weitestgehend automatisch verarbeiten und spart sich die manuelle Digitalisierung durch ihre Mitarbeiter. Denkbar ist, dass die abstrakte Datenstruktur verknüpft mit den Inhalten direkt an Produktionsmaschinen weitergeleitet werden.

Damit wird die Basis einer Automatisierungsfähigkeit der Kommunikation zwischen Kunde und Druckerei geschaffen. Dies war im bisherigen Verfahren bei dem beispielsweise Freitextbeschreibungen verschickt wurden nicht möglich und zog erheblichen, teuren und manuellen Abstimmaufwand nach sich. Ähnlich wie bei den ganz einfachen Produkten der Online-Drucker, z.B. bei Visitenkarten, Briefbogen, Flyer, etc. soll mittels des Verfahrens ein hoher Automatisierungsgrad erreicht werden, vorzugsweise soll das Verfahren vollautomatisch ablaufen, auch bei Änderungen am Produkt.

In anderen Worten soll unter anderem eine Produktbeschreibung durch Kunden in einer Struktur, aus der die wesentlichen, für die Herstellung und Bewertung erforderlichen Angaben automatisiert entnommen werden können, bereitgestellt werden.

Dabei enthält die abstrakte Datenstruktur vorzugsweise keine exakten Definitionen aller zur Herstellung des Druckprodukts notwendigen Einstellparameter für die Druckmaschine, da dies kundenseitig nicht definiert werden kann. Denkbar ist somit, dass die abstrakte Datenstruktur notwendigen Einstellparameter für die Druckmaschine nicht enthält. Die Zuordnung zu den passenden und auch dispositiv verfügbaren Maschinen erfolgt vorzugsweise durch das MIS/ERP-System in der Druckerei.

In einer vorteilhaften Ausführungsform beschreibt die abstrakte Datenstruktur nur einen gewissen Anteil aller möglichen Arten von Druckprodukten, vorzugsweise nur 80 % oder 90 % aller möglichen Arten von Druckprodukten.

Exoten, wie z.B. bibliophile Bücher mit Ledereinbänden, bleiben vorzugsweise außen vor.

In einer vorteilhaften Ausführungsform kann das Zielsystem in der Druckerei (MIS oder ERP-System) aus den der abstrakten Datenstruktur zugeordneten Informationen eine Datei für die direkte Ansteuerung der Druckmaschine, vorzugsweise eine Datei im Format xjdf erzeugen.

In einer denkbaren Variante sind der abstrakten Datenstruktur mehrere Druckversionen zugeordnet, wobei eine Druckversion unabhängig von einer anderen Druckversion ist. Gleiche Inhalte verschiedener Druckversionen können wörtlich beschreibend angegeben werden.

In einer denkbaren Ausführungsform können der abstrakten Datenstruktur über das Druckprodukt hinausgehende Informationen, einschließlich seiner Verpackung und Auslieferung sowie zu den zur Herstellung notwendigen Werkzeuge, zugeordnet werden.

Denkbar ist, dass in der abstrakten Datenstruktur Informationen zu Ausstattungen zuordenbar sind. Ausstattungen sind beispielsweise eingeklebte Produktproben in Zeitschriften. Denkbar ist, dass eine automatische Falzlageneinteilung der herzustellenden Produkte und damit eine Automatisierung der Drucklegung durch die der abstrakten Datenstruktur zugeordneten Informationen möglich ist.

In einer vorteilhaften Ausführungsform umfasst die abstrakte Datenstruktur eine Paginierfunktion, durch die bis auf die Seitenebene des Druckprodukts den jeweiligen Seiten Informationen und/oder Inhalte zugeordnet werden können. Erst mit dieser Funktion ist die Vorstufe der Druckerei eindeutig in der Lage, die angelieferten Informationen und/oder Inhalte den zu produzierenden Falzlagen bzw. Druckbogen eindeutig zuzuordnen. Ohne diese Paginierfunktion ist eine Automatisierung dieses Vorgangs von weiteren manuellen Vorgaben abhängig und sowohl aufwendig als auch fehleranfällig.

Ausstattungen können damit exakt bestimmten Seiten jeder Druckversion eines Endprodukts zugeordnet werden. Dies gilt - über die eindeutige Identifikation der einzelnen Seiten - auch für unpaginierte Seiten (Seiten ohne Seitenzahl). Denkbar ist auch die Darstellung der Platzierung der Ausstattung auf einer für den Anwender sprechenden Form, z.B. "Anhang A - Seite 5" statt nur 195. Seite des Fertigerzeugnisses.

In einer möglichen Ausführungsform können die strukturierten Druckdaten über ein Änderungsmanagement jederzeit aktualisiert werden. Über dieses Änderungsmanagement können somit nicht nur einmalig Produktstrukturen erfasst bzw. übergeben werden, sondern während der ganzen Laufzeit eines Projekts können jederzeit Daten ausgetauscht und die jeweiligen Stände der Produktbeschreibung zwischen Auftraggeber und Druckerei abgeglichen werden. Ohne diese Funktion sind keine automatisierten Strukturtransfers in der Praxis realisierbar.

Die abstrakte Datenstruktur beschreibt vorzugsweise nicht nur Akzidenzen, wie Prospekte, Briefbogen oder Kataloge sondern über spezifische Erweiterungen alle Druck- und Verarbeitungsverfahren auch für die komplexe Buchherstellung, wobei der Produkttyp beispielsweise Hardcover ist, Zeitungen, wobei der Produkttyp beispielsweise Newspaper ist, Falzprospekte, Zeitschriften und Kataloge im Bogen- und Rollenoffsetdruck sowie Tiefdruck, Haftetiketten auf der Rolle und auf dem Bogen, im Buchdruck, Flexodruck oder Digitaldruck hergestellte Druckprodukte, Blattware, wie Visitenkarten, Flyer oder Briefbogen, Plakate bis zu Affichen (Großplakate am Bahnhof z.B.) und Spannplakaten, Digitaldruckprodukte und -eindrucke, Siebdruckprodukte, 3D-Druckprodukte, wie z.B. feste und flexible Verpackungen, 3D-Puzzles und gemischte Projekte aus diesen Produkten und Teilprodukten.

Die abstrakte Datenstruktur beschreibt vorzugsweise nicht nur Einzelprodukte, sondern auch ganze Projekte, die aus einem oder mehreren Einzelprodukten bestehen. Z.B. ist ein Projekt ein Komplettmailing, welches Versandhülle, Anschreiben, Flyer, Broschüre, Antwortkarte und Rückhülle als Einzelprodukt umfasst. Denkbar ist, dass diese, unabhängig von der technischen Herstellung, im Detail beschrieben werden.

Denkbar ist, dass bei periodisch erscheinenden Zeitschriften auch die einzelnen Ausgaben jeweils ein einzelnes Produkt im Projekt "Jahresauftrag zur Herstellung der Zeitschrift sind.

Denkbar ist, dass der abstrakten Datenstruktur wesentliche Eigenschaften eines einzelnen Druckprodukts, welches auch in einem weiteren Druckprodukt enthalten sein kann, zuordenbar sind. Beispielsweise kann die Herstellung bzw. Beschaffung eines Druckprodukts innerhalb der abstrakten Datenstruktur beschrieben werden.

Denkbar ist, dass beschrieben wird, ob das Druckprodukt etwa als Zukaufartikel extern hergestellt wird, was das Druckprodukt kostet, ob das Druckprodukt als Beistellartikel des Kunden oder durch den Kunden selbst beschafft bzw. hergestellt wird und, bei eigener Herstellung, um welche Druckproduktart es sich handelt und, bei mehreren Werken, in welchem es hergestellt wird. Druckproduktarten sind z.B. Broschüre in Rückenheftung, Rollenhaftetikett oder Bücher bzw. Hardcover

Ein mögliches weiteres wesentliches Strukturelement der abstrakten Datenstruktur ist die Bindeart. Es kann z.B. bei Briefbogen, Visitenkarten, Falzprospekten, etc. keine Bindung vorliegen. Es kann auch Rückenheftung, Klebebindung oder Fadenheftung vorliegen. Die Bindeart steuert wesentliche Prozesse bis zur Verarbeitung.

Denkbar ist, dass das die abstrakte Datenstruktur Strukturebenen vorsieht. Diese können etwa in Fertigerzeugnissen als lieferbare Endprodukte oder in Druckversionen bestehen. Druckversionen unterscheiden sich voneinander im drucktechnischen Aufbau. Eines oder mehrere Fertigerzeugnisse je Druckversion sind möglich. Die Druckversionen können sich komplett unterscheiden oder Gleichteile aufweisen.

Fertigerzeugnisse sind vorzugsweise Exemplare einer Druckversion die mit keiner, einer oder mehreren Ausstattungen versehen worden sind. Ausstattungen sind Beilagen, wie Prospekte, Postkarten, Beihefter, wie beigestellte gedruckte Bestandteile die im Bund mit geheftet werden und Beikleber, wie auf einer Seite angeklebte Ausstattungen, wie z.B. Antwortpostkarten, CDs, DVDs, Warenproben, etc. Denkbar ist, dass angegeben wird auf welcher Seite des Fertigerzeugnisses eine bestimmte Ausstattung angebracht wird oder ob keine Ausstattung angebracht werden soll.

Ausstattungen beeinflussen die Freiheitsgrade der Falzlagen bei der Herstellung. Das Druckprodukt wird aus einzelnen Falzlagen bzw. Falzbogen zusammengesetzt. Wenn ein Produktteil die Seiten 1 bis 32 umfasst, so könnte es (je nach Format und technischer Ausstattung z.B.) in einer einzigen Falzlage zu 32 Seiten produziert werden. Wenn aber auf der Seite 16 die Ausstattung Antwortpostkarte angebracht werden soll, dann wird das Produktteil vorzugsweise in mindestens 2 Falzlagen hergestellt. Bei einer Klebebindung sind meist die Seiten 1 bis 16 und 17 bis 32 auf je einer Falzlage, damit auf der Seite 16 als letzter Seite der ersten Falzlage die Ausstattung angebracht werden kann.

In einer vorteilhaften Ausführungsform der abstrakten Datenstruktur kann vorzugsweise die Angabe erfolgen, dass eine Ausstattung angebracht werden muss. Der Typ der Ausstattung, z.B. Beikleber oder Postkarte und die Angabe der paginierten Seitenzahl kann angegeben werden. Bei anderen Ausstattungen, wie z.B. Beilagen, beigelegte Prospekte, etc. ist die Trennung der Falzlagen nicht erforderlich und die Herstellung bzw. Beilegung erfolgt auf eine andere Weise.

Denkbar ist also ein Strukturelement der abstrakten Datenstruktur, welches das Anbringen mindestens einer Ausstattung an einer paginierten Seite definiert.

Jedes Fertigerzeugnis ist vorzugsweise als 1:n Relation genau einer bestimmten Druckversion zugeordnet. Vorzugsweise ist ein Fertigerzeugnis einer oder mehrerer Druckversionen zugeordnet. Es unterscheidet sich von den anderen Fertigerzeugnissen derselben Druckversion vorzugsweise durch die Ausstattungen, die in ihm enthalten sind. Denkbar ist, dass keine Ausstattungen oder mindestens eine von allen in der abstrakten Datenstruktur definierten Ausstattungen in einem Fertigerzeugnis einer Druckversion enthalten sind.

Denkbar ist, dass jede Sendung in der abstrakten Datenstruktur genau einem Fertigerzeugnis zugeordnet wird. Jede Sendung kann mindestens eine Packvorschrift, mindestens eine Versandadresse und mindestens ein Liefertermin bzw. mindestens ein Eintrefftermin beim Kunden und/oder mindestens ein Versandtermin bei Produktionsende zuordenbar sein. Denkbar ist auch, dass dem Fertigerzeugnis ein ganzer Lieferverteiler zugeordnet ist, also eine Liste, die beschreibt welches Fertigerzeugnis an welchem Tag an welche Adresse in welcher Verpackungsform zu liefern ist. Bei Supermarkt-Prospekten sind das beispielsweise die einzelnen Märkte mit unterschiedlichen Mengen und Pack- und Versandhinweisen, wie z.B. maximale Palettenhöhe, Bündelung, etc. Diese Angaben steuern bzw. beeinflussen die Herstellung sowohl in technischer als auch in terminlicher Hinsicht.

In einer vorteilhaften Ausführungsform sind in der abstrakten Datenstruktur jedem Fertigerzeugnis und jeder Versandadresse eine Verpackungsvorschrift und ein Liefertermin zuordenbar. Diese steuern neben der Umverpackung auch die Transportverpackung zur jeweiligen Lieferadresse und die weiteren logistischen Prozesse, wie Versandbereitstellung, Packreihenfolge, Versanddienstleistertouren, etc. Die Strukturierung der Verpackungsvorschriften ist vorzugsweise in mehrere Ebenen möglich bzw. ansteuerbar. Denkbar ist, dass nur per Identifikationsnummer eine in Stammdaten definierbare Verpackungsvorschrift referenziert wird. Dies führt zu einer durchgängigen und vollständigen Beschreibung der zu liefernden Endprodukte als Basis für eine durchgängige und vollständige Automatisierung aller Prozesse.

Druckversionen bestehen vorzugsweise aus einem oder mehreren Druckproduktteilen. Sie haben eine Druckauflage mit der Summe der Bedarfe bzw. Ausliefermengen der beteiligten Fertigerzeugnisse. Auch Muster für Kunden und Archiv bzw. Qualitätssicherung sind Fertigerzeugnisse bzw. können über Lieferverteiler abgebildet werden.

Produktteile sind gekennzeichnet durch Elemente, wie Inhalt, Umschlag, Buchdecke, etc., Seitenzahl, Farbigkeit, Format und den Bedruckstoff.

Der Bedruckstoff ist vorzugsweise Papier, aber auch andere Bedruckstoffe, wie Karton oder Folienmaterial, etc. sind natürlich denkbar.

Druckproduktteile werden vorzugsweise eingeteilt in eine oder mehrere Falzlagen zur Herstellung. Die Einteilung kann vorgegeben werden oder die Einteilung kann im Zielsystem (MIS- bzw. ERP-System der Druckerei) automatisch durchgeführt werden.

Ein Druckproduktteil kann auch identisch sein mit einem Druckproduktteil aus einer anderen Druckversion. Diese Druckproduktteile werden vorzugsweise als Gleichteile bezeichnet. Ein Druckproduktteil kann sich von einem Druckproduktteil einer anderen Druckversion durch geringe Modifikationen unterscheiden, wie dies bei Wechselplatten der Fall ist. Beispielsweise sind Texte der englischen Druckversion anders als in der deutschen Druckversion. Die Bilder und Hitergründe aber bleiben gleich. Optionale Angaben je Druckproduktteil sind Sonderarbeiten, wie Veredelungen oder Perforationen, etc. Diese können in Form von Textbeschreibungen in der abstrakten Datenstruktur beschrieben werden. In diesen Fällen ist eine manuelle Nachbearbeitung durch das Zielsystem bzw. die Druckerei erforderlich.

Denkbar ist, dass je Produktteil die Paginierung der einzelnen Seiten angegeben und die Orientierung der Seiten angegeben wird. Orientierung bedeutet ob die Seite auf dem Kopf oder auf dem Fuß steht. Titelseiten stehen bei manchen Produkten auf dem Kopf. Diese Informationen werden von der Vorstufe der Druckerei für die Datenprüfung benötigt, damit vermeintliche Fehler, weil beispielsweise eine Seite auf dem Kopf steht, nicht ins Falsche, die Seite also fälschlich umgedreht wird, korrigiert werden.

Normalfälle eines Paginierungsschemas sind die Paginierung nach Rückenheftungsschema und nach Klebebindungsschema bzw. unpaginiert, wobei in diesem Fall keine Seitenzahlen auf den Seiten erscheinen. Die Paginierungsangabe steuert die Anordnung der Seiten auf der Falzlage. Beispielsweise befinden sich bei 32 Seiten Rückenheftung und Druck zu 2 x 16 Seiten, Seite 1-8 und 25-32 auf dem äußeren/ersten Bogen und die Seiten 9-24 auf dem zweiten Bogen bzw. dem inneren Bogen. Bei Bindeart Klebebindung wird Seite 1-16 und 17-32 auf die beiden Bogen gestellt. Es ist daher vorzugsweise vorgesehen, dass die Paginierung nicht durch einen weiteren Schritt zu Falzlagen, Falz-/Druckbogen usw. zugeordnet wird. In anderen Worten kann eine Zuordnung von Seiten zu Inhalten in der abstrakten Datenstruktur vorgesehen sein.

Des Weiteren ist denkbar, dass bei der Paginierung zusätzlich die Angabe von Präfix und Suffix bzw. Postfix möglich ist. Das Präfix vor der Seitenzahl kann z.B. die Ausgabe einer Zeitschrift, beispielsweise "Jan 2021-1" bis "Jan 2021-16", oder eine Kapitelangabe enthalten. Im Falle einer kapitelweisen Paginierung, welche ab einer bestimmten Seitenzahl sich ändernden Präfixe oder Suffixe erfordert kann die Angabe beispielsweise lauten: "Kapitel 1 Seite 1 bis 10" "Kapitel 2 Seite 1 bis 6" anstatt durchgehend Seite 1 bis 16. Das Suffix kann entsprechend hinter der Seitenzahl stehen, beispielsweise als Sprach- oder Landes-ID (-BW, -BY, etc. für Bundesländer oder - EN, -DE für Sprachfassungen).

Neben der durchgehenden Paginierung sind auch mindestens zwei, vorzugsweise eine Vielzahl so genannter Hilfspaginierungen denkbar.

Eine davon dient als Unterpaginierung, z.B. von Beiheftern, die zwar innerhalb des Produktes beschrieben werden, aber nicht hergestellt werden, weil sie z.B. beigestellt werden. Denkbar ist auch, dass es sich um unpaginierte Seiten handelt, die aber z.B. für die Vorstufe der Druckerei eindeutig identifizierbar sein müssen. Denkbar ist, dass selbst hergestellte Seiten eine numerische Seitenzahl ohne Präfix und Suffix haben können. Die Paginierung selbst (komplette Seitenzahl) wird daraus ermittelt mit Präfix/Suffix und arabischen oder römischen Zahlen als Pagina, beispielsweise ABC-I, -II, etc.

Eine zweite Hilfspaginierung dient vorzugsweise zur Neupaginierung bestimmter Seitenbereiche im Fall von Änderungen. Dies kann z. B. der Fall sein, wenn vor dem neu zu paginierenden Teil ein weiterer Produktteil eingefügt oder dessen Seitenzahl geändert werden soll oder muss. Hier kann in der ersten Seite des Kapitels in der zweiten Hilfspaginierung die Startseite mit den Präfix- oder Suffix-Angaben angegeben werden und die Anzahl der fortlaufend zu paginierenden Seiten. Das Zielsystem (z.B. digitale Druckmaschine bzw. digitales Vorstufensystem bei analogem Druck) kann damit diese Seitenzahl die gelieferten PDF-Daten (mit dem "Inhalt" der Seite) der richtigen "Position" im Fertigerzeugnis zuordnen

Denkbar ist, dass eine Rückwärtspaginierung des Druckprodukts oder bestimmter Abschnitte detailliert möglich ist. Rückwärtspaginierung ist die Zählung der Seitenzahl mit Inkrement -1 statt +1. Manche Produkte werden z.B. in der deutschen Sprachfassung von vorne nach hinten paginiert. Die englische Fassung wird in der gleichen Zeitschrift von hinten paginiert. Das bedeutet, man dreht das Produkt und liest von der letzten Seite her. Bei einem Produkt mit 98 Seiten müssen die Seiten 1, 2, 3, ... dann für die Herstellung wie die Seiten 98, 97, 96, ... bei Vorwärtspaginierung angeordnet sein und auf dem Kopf stehen. Bei Produkten mit Rückwärtspaginierung können die (vorwärts paginierten) deutschen Seiten 1 bis 50 und, nach dem Drehen den Produkts, von hinten die rückwärts paginierten englischen Seiten 51 bis 100 gelesen werden, obwohl auch die englischen Seiten eine Pagina 1 bis 50 z.B. aufweisen.

Die Druckproduktteile bestehen vorzugsweise aus einzelnen Seiten. In der abstrakten Datenstruktur ist die Ebene "Seiten" vorzugsweise optional. Wenn sie nicht vorhanden ist, kann sie im Zielsystem automatisiert angelegt bzw. nachgefüllt werden. Ist sie vorhanden, so dient sie zur genauen Beschreibung jeder einzelnen Seite und optionaler Veränderung auf Seitenebene. Damit können z.B. Wechselseiten für die Steuerung der digitalen Vorstufe gekennzeichnet werden. Beispielsweise kann damit festgestellt werden, auf welchen Seiten einer zweiten Druckversion Änderungen gegenüber der ersten Druckversion bestehen. Denkbar ist beispielsweise eine Anzeige mit einer speziellen Farbe (Silber, Gold, Leuchtfarbe o.ä.). Nur die Falzlagen mit diesen Seiten brauchen Wechselplatten bzw. zusätzliche Druckplatten gegenüber der ersten Druckversion. Auch kann hier die Paginierung individuell auf jeder einzelnen Seite angepasst werden, wenn das Paginierungsschema im Einzelfall nicht passt. Denkbar ist, dass die Farbigkeit seitenspezifisch angepasst wird. Nach der Einteilung in Falzlagen können die zugehörigen Falzlagen auf der Seitenebene vermerkt werden. Daraus kann die Farbigkeit der einzelnen Falzlagen bzw. die Herstellsteuerung der Druckbogen bzw. Druckplatten abgeleitet bzw. optimiert werden.

Die einzelnen Falzlagen werden aus Falzbogen und diese aus Druckbogen gewonnen. Die Regeln der Einteilung der einzelnen Seiten zu Falzlagen sowie die Zusammensetzung von Falz- und Druckbogen aus den einzelnen Falzlagen oder die so genannte Sammelformenbildung zur Herstellkostenoptimierung können nicht direkt aus den strukturierten Druckproduktdaten entnommen werden. Es stehen aber in den strukturierten Druckproduktdaten alle benötigten Informationen für die Sammelformenbildung zur Verfügung, einschließlich der Angabe, ob eine Sammelformenbildung überhaupt durchgeführt werden soll. Beispielsweise wird diese nicht durchgeführt, wenn die Liefertermine von deutscher und englischer Druckversion zu weit auseinanderliegen oder wenn z.B. ein Kalender für Übersee vier Wochen früher verschifft werden muss.

Denkbar ist, dass gemeinsame Bestandteile zwischen Druckversionen definierbar sind. Beispielsweise können Gleichteile und/oder Druckmengen addiert werden.

Wechselplatten für ähnliche Teile sollten vorzugsweise zur Rüstkostenersparnis direkt hintereinander hergestellt werden.

Druckprodukte unterschiedlicher Herstellverfahren sind vorzugsweise innerhalb eines Projekts definier- und kombinierbar. Z.B. Anschreiben oder Brief im Digitaldruck, Prospekt im Bogenoffset oder Katalog im Rollenoffsetdruck.

Abhängig von der Druckproduktart, etwa Broschüre, Hardcover oder Haftetikett, und dem Druckproduktteil bzw. Druckproduktteiletyp sind einzelne Unterstrukturen der abstrakten Datenstruktur vorzugsweise zusätzlich freigeschaltet bzw. die besonderen, erweiterten Beschreibungen für diese Druckproduktteile können dort hinterlegt werden. Hierzu gehören bei Broschüren z.B. verkürzte Umschläge, bei Hardcover die Beschreibung der Decke mit den benötigten Werkzeugen und bei Haftetiketten z.B. die Eigenschaften der auszulegenden Rollen und der für die Veredelung benötigten Werkzeuge.

Die Werkzeuge werden vorzugsweise in eigenen Stammdaten hinterlegt und per Identifikationscode kann vorzugsweise darauf zugegriffen bzw. darauf referenziert werden. Diese zusätzlichen vom Druckproduktteiletyp abhängigen Erweiterungen sind vorzugsweise frei erweiterbar und damit auch für neue Herstellverfahren und erweiterte bzw. angepasste Produktbeschreibungen einsetzbar.

An verschiedenen Stellen der abstrakten Datenstruktur kann vorzugsweise per Referenz auf die Werkzeugidentifikationsnummer auf Werkzeuge zurückgegriffen werden. Werkzeuge sind z.B. Stanzformen für die äußeren Konturen von Etiketten oder Prägestempel für die Decken von Büchern oder Tiefdruckzylinder oder Druckplatten.

Denkbar ist, dass eine Definition, abweichend vom Standardwerkzeug, für einzelne Bereiche der abstrakten Datenstruktur erfolgt. Beispielsweise kann die Verwendung eines Tiefdruckzylinders anstatt von Druckplatten definiert werden. Die Werkzeuge werden vorzugsweise in einem separaten Werkzeugstamm definiert und innerhalb der abstrakten Datenstruktur, beispielsweise einem Produktteil oder einem Fertigerzeugnis, zugeordnet.

Die abstrakte Datenstruktur geht vorzugsweise nicht von einem bestimmten Produktionsweg aus und beschreibt diesen, sondern beschreibt die herzustellenden Druckprodukte. Aus diesen Angaben kann das Zielsystem (MIS-oder ERP-System) in der Druckerei die technischen Angaben ableiten und Ergänzungen dazu definieren, um die technischen Anlagen, insbesondere Druckmaschinen der unterschiedlichen Hersteller, direkt anzusteuern. Von diesen Anlagen, insbesondere Druckmaschinen, ist z.B. abhängig, ob zu 1, 2 oder 4 Nutzen gestanzt wird. Wenn eine Druckerei zu 2 Nutzen stanzt und hierfür eine Stanzform als Werkzeug braucht, so ist dies in der Anschaffung teurer als eine Stanzform für nur 1 Nutzen. Die Kosten der Stanzform, welche von der Druckerei oder vom Auftraggeber, z.B. an Hand einer bekannten/vereinbarten Preisliste definiert werden, variieren deshalb sind diese aus diesen Angaben heraus im Zielsystem für den 1-Nutzen Produktionsweg als auch für den 2-Nutzen Weg ermittelbar.

Mittels der abstrakten Datenstruktur können vorzugsweise nicht nur Aufträge, sondern auch Angebote bzw. Anfragen abgewickelt werden. Dazu sind auf Ausgabenebene mehr als eine Auflage bzw. Losgröße definierbar. Denkbar ist, dass bei einer jeweiligen denkbaren Auflage von 1.000, 20.000 und 500.000 eine Berechnung im Zielsystem 3 Produktionswege berechnen muss. Dabei können unterschiedliche technische Wege jeweils optimal sein: bei 1.000 Stück der Digitaldruck, bei 20.000 der Bogenoffsetdruck und bei 500.000 der Rollenoffsetdruck. Das Material bzw. der Bedruckstoff, z.B. Papier wird dabei vorzugsweise für Digital und Bogenoffset in Form von Papierbogen bzw. großen Briefbogen beschafft, im Rollenoffsetdruck als langes Papier von der Rolle. Dieselbe Papierqualität ist aber nicht immer als Bogen- oder als Rollenware verfügbar. Es müssen also vorzugsweise ähnliche Sorten definiert werden. Deshalb kann in der abstrakten Datenstruktur vorzugsweise für jedes Produktteil sowohl die Bogenpapier-Qualität als auch die entsprechende Rollenpapier-Qualität des Bedruckstoffs (Papier) beschrieben werden. Wenn ausschließlich Bogen- bzw. Rollendruck zum Einsatz kommen darf oder soll, dann kann die nicht benötigte Angabe vorzugsweise auch leer oder ungefüllt bleiben. Ansonsten können vorzugsweise darauf aufbauend die kostenbezogen günstigsten Produktionswege je Auflage im Zielsystem ermittelt werden.

Ein umfassendes Änderungsmanagement ist mit der abstrakten Datenstruktur bzw. mit den strukturierten Druckproduktdaten vorzugsweise abbildbar. Dies bedeutet, dass Teile von Druckprodukten, also ganze Teile oder ein ganzes Druckprodukt oder einzelne oder alle Falzlagen, je nach Organisationsanforderung, bereits hergestellt werden können, während andere noch in der Bereitstellungsphase, also in der Phase der Zuordnung oder des Speicherns oder Versendens der Druckproduktdaten sind.

Für jede Falzlage eines Druckproduktteils oder einer Druckproduktebene wird vorzugsweise ein Freigabedatum bzw. ein Freigabestatus verwaltet. Diese "Freigabe zum Druck" wird vom Kunden anhand eines vorgelegten Musters erteilt. Diese Muster zeigt wie das betreffende Druckproduktteil nach der Produktion aussehen soll. Der Kunde prüft das Muster sodann auf z.B. Rechtschreibfehler oder korrekte Preisangaben. Nach der Freigabe kann diese Falzlage nicht mehr ohne erhebliche Mehrkosten und Terminverzug wegen wiederholter Produktion geändert werden. Die Freigabe auf Druckproduktebene schließt vorzugsweise die Freigabe aller Druckproduktteile, die Freigabe eines Druckproduktteils und die Freigabe aller Falzlagen des Druckprodukts ein. In anderen Worten schließt die Freigabe einer Ebene der abstrakten Datenstruktur bzw. der strukturierten Druckproduktdaten alle hierarchisch darunterliegenden Ebenen ein. Denkbar ist, dass wenn der Kunde eine Freigabe erteilt, er diese Information in die abstrakte Datenstruktur einträgt und die abstrakte Datenstruktur bzw. die strukturierten Druckproduktdaten an die Druckerei sendet. Diese notiert die Freigabe vorzugsweise. Ab diesem Zeitpunkt darf diese Falzlage und/oder das Druckprodukt oder Druckproduktteil vorzugsweise nicht mehr geändert werden.

Das Änderungsmanagement im Datenmodell umfasst vorzugsweise auch eine Freigabe des Bedruckstoffs, z.B. Papier, Folie, Karton, etc. Dieser Bedruckstoff wird nach Qualität und Sorte herkömmlich in einer Auftragsbestätigung definiert, weil davon unter anderem der Beschaffungspreis und die Beschaffungszeit (Lieferzeit) abhängen. Bei Lagersorten mit fest vorgegebenen Standardformaten ist das Material in der Regel binnen weniger Tage erhältlich. Dies ist z.B. bei Lagerware im Papiergroßhandel der Fall. Das optimale Format bei Bogendruck, welches oft kleiner als das Standardformat und deshalb kostengünstiger und ressourcenschonender ist und generell alle Sorten bei Rollenoffsetdruck haben i.d.R. Lieferzeiten von mindestens 4 Wochen. Bei der Bestellung muss das exakte Materialformat bzw. seine Rollenbreite angegeben werden. Das ist abhängig von der Druckmaschine bzw. Druckmaschinenklasse die die Druckerei einsetzt. Wenn in Falzlagen zu 16 Seiten gedruckt werden soll und das passende Papier dafür bestellt wurde, so kann der Auftrag nicht mehr später auf 48 oder 64-seitige Falzlagen umgestellt werden. Das Papier wäre zu klein und der entsprechende Produktionsweg nicht mehr realisierbar. Deswegen wird beim Änderungsmanagement vorzugsweise ein Status wie "Papier freigegeben" bzw. "Papier fixiert" verwaltet bzw. definiert und nachfolgende Änderungen müssen die freigegebenen bzw. bestellten Materialien in der bestellten Form und Größe auch der Herstellung zugrunde legen, selbst wenn es technisch ungünstig ist bzw. es günstigere Herstellungswege gäbe.

Eine Materialänderung bzw. Papiersortenänderung ist nach der Freigabe der ersten Falzlage eines Druckproduktteils vorzugsweise nicht mehr möglich. Die Druckerei ergänzt deshalb vorzugsweise die Angabe "Papier bestellt" in jeder Falzlage und liefert die ergänzte abstrakte Datenstruktur bzw. die so ergänzten strukturierten Druckproduktdaten vorzugsweise an den Auftraggeber zurück. Auch nach jeder Änderung sollen die Falzlagen vorzugsweise noch mit dem bestellten Papier herstellbar sein. Dies bedeutet, dass weder Papiersorte noch dessen Qualität in diesem Stadium änderbar sind. Änderbar bleibt aber vorzugsweise die Seitenzahl. Beispielsweise bleibt änderbar welche Seiten auf der papierfixierten Falzlage stehen und welche Paginierung, z.B. römisch oder arabisch, diese haben. Ebenso bleibt der Inhalt auf diesen Seitenvorzugsweise änderbar. In anderen Worten sind Bedruckstoff und Inhalt vorzugsweise unabhängig voneinander in der abstrakten Datenstruktur definiert.

Die Herstellverfahren und -einheiten, z.B. Druckbogen können vorzugsweise direkt aus der definierten abstrakten Datenstruktur bzw. der strukturierten Druckproduktdaten unter Beachtung der beim Hersteller bzw. der Druckerei vorhandenen technischen Ausstattung abgeleitet werden. Alle Angaben dafür stehen vorzugsweise in der abstrakten Datenstruktur bzw. in den strukturierten Druckproduktdaten zur Verfügung. Das vorliegende Verfahren teilt Druckproduktteile in Falzlagen beim Auftraggeber ein. Die Kombination der Falzlagen zu Falzbogen und Druckbogen wird vorzugsweise im Zielsystem (MIS/ERP der Druckerei) vorgenommen. Dort werden die definierte abstrakte Datenstruktur bzw. die strukturierten Druckproduktdaten vorzugsweise an Hand der technischen Möglichkeiten des Herstellbetriebs, also der Druckerei oder der Binderei in Druckbogen, Arbeitsgänge, usw. umgesetzt.

Zusatzleistungen über einen definierten Standard- oder Basisleistungsumfang hinaus sind je Druckproduktteil und für die Verarbeitung je Druckversion vorzugsweise definierbar. Dazu zählen z.B. Perforationen, laminierte Umschläge, Blindenzeichen. Denkbar ist, dass es hier zu Begrenzungen der Vollautomatisierung kommen kann und eine manuelle ergänzende Bearbeitung des erzeugten Auftrags notwendig wird.

Durch die flexiblen Format- und Gewichtsangaben auf jeder Stufe, also Druckprodukt, Fertigerzeugnis, Ausstattung, Druckversion, Druckproduktteil oder Falzlage können in vorteilhafter Weise Teile unterschiedlichen Formats und Gewichts beschrieben und miteinander kombiniert werden. Mit den Steuerangaben kann die Exemplarstärke jedes Fertigerzeugnisses vorzugsweise für den Versand genau berechnet werden. Auch eine Auswahl der benötigten Verpackungsmaterialien sowie der möglichen Transportwege, z.B. Paketdienst oder Spedition, je nach Empfängeradresse ist damit vorzugsweise durchführbar.

Formatangaben sind beispielsweise Format oder Gewichtsangaben bzw. Format-Spezifikationen in Form von Länge, Breite, Höhe. Die Höhe wird vorzugsweise bei 3D-Produkten (z.B. Verpackungen) angegeben. Das Gewicht kann vorzugsweise pro Exemplar angegeben werden. Bei 2D-Produkten ist die Angabe von Länge und Breite denkbar. Bei 3D-Produkten ist die Angabe von Länge, Breite und Höhe denkbar.

Die abstrakte Datenstruktur ist vorzugsweise für alle Arten von Druckprodukten bzw. für alle Druckproduktarten geeignet.

Mit einem Konstruktionscode kann in der abstrakten Datenstruktur bzw. in den strukturierten Druckproduktdaten vorzugsweise auf eine bestimmte Ausführung bzw. eine bestimmte Zeichnungsnummer referenziert werden. Denkbar ist, dass deren Stammdaten nicht direkt in der abstrakten Datenstruktur bzw. in den strukturierten Druckproduktdaten enthalten sind. Diese werden z.B. im Verpackungsdruck zur vollständigen Beschreibung des Endprodukts benötigt.

Je Druckproduktteil können vorzugsweise Maße bzw. Formatbreiten in der abstrakten Datenstruktur bzw. in den strukturierten Druckproduktdaten spezifiziert werden. Gefalzte Seiten in einer Falzlage bzw. einem Druckproduktteil müssen nicht immer gleich breit sein. Manche Broschüren, z.B. im Möbel- oder Inneneinrichtungsbereich haben "geschuppte" Seiten damit oft farblich gekennzeichnete Bereiche schnell gefunden werden können. Diese Felder der abstrakten Datenstruktur können vorzugsweise auch für zusätzliche Formatangaben, z.B. bei Verpackungskonstruktionen, verwendet werden.

Auf den Ebenen Fertigerzeugnis und Druckproduktteil können vorzugsweise jeweils Digitaleindrucke in der abstrakten Datenstruktur definiert werden. Dies kann z.B. in Form von Zählern, festen Texten oder als Image-Dateien bzw. in Form von Dateiverzeichnissen erfolgen. Beispielsweise kann eine Datei je Exemplar oder eine Nummer je Exemplar auf einer bestimmten Seite oder Datendateien oder Adressen, z.B. eine Adresse je Exemplar, definiert werden. Aus den Angaben dazu kann das Zielsystem vorzugsweise die hierfür notwendigen Arbeitsgänge extrahieren und die technische Ansteuerung der Produktionsmaschinen auslösen.

Je nach bearbeitetem Teil, Druckproduktteil oder Fertigerzeugnis kann vorzugsweise der maßgebende Fertigungsauftrag angesteuert werden. Damit ist es möglich, individuell angepasste bzw. codierte Exemplare zu definieren. Im Fall von einzelnen Dateien wird nur angegeben, dass dies der Fall ist. Es wird herkömmlich nicht angegeben, welche Datei je Exemplar aufgebracht werden soll bzw. welchen Inhalt z.B. die Adressen haben müssen. Dies erfolgt erst nach der Fixierung bzw. der Produktionsfreigabe des Fertigerzeugnisses in der Produktionssteuerung. Damit können vorzugsweise auch mehrere Adressgruppen, z.B. aus verschiedenen Selektionsläufen des Kunden auf ein oder mehrere Fertigerzeugnisse aufgebracht werden und der Inhalt wird erst kurz vor Produktionsbeginn des einzelnen Fertigerzeugnisses final festgelegt. Die Steuerung der Bilder auf dem Produkt kann z.B. auch abhängig von der aufgebrachten Adresse bzw. deren Steuerangaben sein. Über die Zuordnung zum Produktteil können z.B. die unterschiedlichen Bilder einer Bildpersonalisierung gesteuert werden. Anstatt einer Adresse mit Name und Anschrift werden vorzugsweise die gewünschten Bilder je Endexemplar definiert.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle im Rahmen dieser Erfindung beschriebenen Merkmale beliebig miteinander kombiniert oder voneinander isoliert beansprucht werden.

Im Folgenden werden die verwendeten Begriffe erklärt. Diese Erklärungen sind nicht einschränkend zu verstehen, sondern dienen der weiteren Erläuterung und die darin genannten Merkmale sind allesamt optional.

Druckprodukte sind vorzugsweise hochindividuelle Produkte, die meist einzeln konstruiert werden. Beispiele finden sich in jedem Bücherschrank: Bücher unterscheiden sich meist nach Format, Dicke und/oder Stärke, Papier, usw. Auch Zeitschriften (Hefte) und Prospekte sind meist ebenso unterschiedlich, je nach Ausgabe.

Periodisch erscheinende Titel wie Zeitschriften und Zeitungen haben Ausgaben, z.B. Januar bis Dezember bei monatlicher Erscheinungsweise. Nicht-periodische Objekte sind vorzugsweise Produkte. Alle Ausgaben eines Jahrgangs sind meist zu einem Projekt zusammengefasst. Bei nicht periodischen Objekten ist vorzugsweise entweder das Produkt das Projekt, oder es werden vorzugsweise mehrere Produkte im Rahmen eines Projekts hergestellt bzw. beauftragt. Z.B. bei einem Komplettmailing sind die Bestandteile Anschreiben, Broschüre, Antwortpostkarte, Versandhülle (Briefumschlag) und Rückhülle (Umschlag für die Bestellung an den Werbetreibenden) vorzugsweise einzelne Produkte innerhalb des Gesamtprojekts Frühjahrsmailing. Z.B. werden die einzelnen Produkte separat hergestellt und können auch technisch unterschiedlich sein, z.B. Briefbogen im Laserdruck mit persönlicher Anrede, Broschüre in Klebebindung, Versandhülle Format C4 mit Absenderaufdruck außen und Werbetexten auf der Innenseite. Alle Bestandteile werden vorzugsweise gedruckt und in einem Lettershop zusammengefügt und postaufgeliefert (PAL = Post-AufLieferung). Letztere vorzugsweise nach Postleitzahlbereichen getrennt, z.B. 31xx, 32xx usw., um durch die mundgerechte Anlieferung bei der Post Gebühren zu sparen. Die gesamte Werbeaktion wird in der Regel in einem einzelnen Auftrag des Kunden an die Druckerei zusammengefasst und ist rechtlich ein zusammenhängendes Projekt bzw. Werk. Einzelne Bestandteile alleine sind für den Auftraggeber nutzlos.

Periodika sehen vorzugsweise je Ausgabe unterschiedlich aus, z.B. in Seitenzahl, Beilagen, Beikleber bzw. Warenproben usw., und werden deshalb vorzugsweise an Hand von Preislisten abgerechnet. Dort sind die unterschiedlichen Bestandteile vorzugsweise einzeln als Bausteine aufgeführt und bewertet. Diese Preislisten beschreiben aber vorzugsweise auch die technischen Möglichkeiten der Druckerei, ob sie z.B. zu 16 oder 32 Seiten drucken kann oder wie viele Stationen die Bindemaschine hat.

Druckprodukte können simple Produkte, also einteilige Produkte sein, wie Briefbogen, Visitenkarten, Plakate, einfache Prospekte oder komplexere. Letztere bestehen vorzugsweise aus mehr als einem Produktteil bzw. Teil. Das sind in der Regel Umschlag und Inhalt bei Broschüren bzw. Softcover. Aber auch mehre Teile sind möglich. Bei Büchern, z.B. Hardcover sind vorzugsweise mehrere Teile die Regel. Produktteile unterscheiden sich vorzugsweise nach Format, z.B. Broschur z.B. mit Endformat A4 und eingelegte Postkarte in A6 quer, 14,8 cm breit und 10,5 cm hoch, Seitenzahl, z.B. Umschlag, z.B. 4 Seiten, Inhaltsteil, z.B. 96 Seiten; Eine Postkarte hat 2 Seiten, auch wenn nur eine Seite bedruckt ist, Papier, wobei der Umschlag meist dickeres Papier als der Inhalt hat und Farbigkeit, wobei eine Postkarte meist 1-farbig schwarz und Umschläge meist 4 oder 5-farbig sind.

Zusätzlich wird ein Produkt vorzugsweise auch über seine Bindeart beschrieben. Einteilige Produkte wie Briefbogen oder Faltprospekte sind nicht gebunden, sondern werden in einem Stück gedruckt und anschließend nur, z.B. bei Prospekten gefalzt und beschnitten und anschließend verpackt. Aber alle Produkte, die aus mehr als einem Teil bestehen oder deren einziges Teil nicht nur aus einer einzigen Falzlage besteht, werden vorzugsweise gebunden. Dazu werden die einzelnen Falzlagen vorzugsweise gefalzt und diese anschließend zusammengetragen und gebunden. Geheftet entspricht der Montage in der normalen Industrie. Die Bindung kann mit Drahtklammern im Rücken erfolgen, z.B. bei preiswerten Broschüren mit maximal 8 mm Dicke oder in Form einer Klebebindung. Dort werden die einzelnen Falzlagen im Rücken mit Leim oder Klebstoff bestrichen und der Umschlag wird dann umgelegt. Nach dem Trocknen wird das Produkt noch grade geschnitten und kann dann verpackt werden. Bücher können auch fadengeheftet werden, ähnlich wie früher Schulhefte, was dauerhafter ist aber auch teurer.

Zusammengetragen werden Falzlagen. Das sind vorzugsweise gefaltete Bogen mit vorzugsweise 4, 6, 8, 12, 16,... 96 Seiten Umfang. Je mehr Seiten auf einer Falzlage stehen, desto größer ist das Falzbogenformat, dies ist der flache bedruckte Bogen Papier der in die Falzmaschine reingeht und gefalzt als Falzlage wieder rauskommt. Ein Falzbogen steht vorzugsweise alleine oder zu mehreren auf dem Druckbogen. Je mehr Falzbogen und je größer diese sind, desto größer wird der Druckbogen. Der Druckbogen passt vorzugsweise auch in die Druckmaschine. Die Größe der Druckmaschine bestimmt also, wie viele Seiten auf einem Druckbogen bzw. einem Falzbogen stehen bzw. enthalten sind. Normalerweise sind kleinere Druckmaschinen billiger als große und werden für kleinere Losgrößen bzw. Auflagen verwendet. Mit großen Druckmaschinen werden i.d.R. große Mengen an Fertigerzeugnissen hergestellt, z.B. Prospekte, ca. 10 Mio. Stück pro Woche, oder dicke Kataloge mit vielen Seiten Inhalt, z.B. Versandhauskataloge mit über 1000 Seiten.

Die Einteilung eines Produkts bzw. einer Ausgabe in Falzlagen bestimmt vorzugsweise auch die technische Machbarkeit beim Binden. Jede Falzlage belegt vorzugsweise eine Station am Binder und deren Anzahl ist begrenzt. Bei Klammerheftung oft 8 oder 10 Stationen maximal, bei Klebebindung z.B. 24 Stationen. Dicke Produkte, die aus mehreren Falzlagen bestehen, werden deshalb vorzugsweise mit vielen Seiten je Falzlage produziert, damit das Produkt hinterher noch gebunden werden kann.

Die dazu notwendigen großen Druckmaschinen hat aber nicht jede Druckerei. Deswegen ist in den Preislisten vorzugsweise nicht nur der kaufmännische Teil, z.B. Preis pro 1000 Falzlagen von Bedeutung, sondern vor allem der technische, d.h. ob zu 8, 16 oder 32 Seiten gedruckt werden kann. Dies beschreibt auch den maximalen Umfang einer Falzlage. Auf einer 32 Seiten Druckmaschine kann eine Falzlage zu 32 Seiten oder es können 2 Lagen mit 16 Seiten oder 4 mit 8 Seiten zusammen gedruckt werden.

Ergebnis des Bindens sind die gedruckten Druckprodukte. Diese können vor allem im Zeitschriftenbereich noch weiter veredelt werden durch Ausstattungen. Das sind z.B. Beilagen, wie Prospekte, angeklebte Postkarten für Werbeantworten, Warenproben, z.B. für Parfüms oder CDs bzw. DVDs in Computerzeitschriften. Das gedruckte Grundprodukt ist vorzugsweise gleich, aber das Fertigerzeugnis unterscheidet sich vorzugsweise in den Ausstattungen. So können Zeitschriften je nach Region mit unterschiedlichen Beilagen belegt werden. Wenn ein Möbelhaus in Düsseldorf sitzt, dann will es u.U. nur in den in NRW verkauften Zeitschriften eine Beilage beilegen bzw. bezahlen und nicht auch in Berlin, Hamburg oder Bayern. Der Verlag definiert also unterschiedliche Fertigerzeugnisse je Bundesland und der Kunde kann sich raussuchen, in welchem Gebiet er seine Beilage haben will oder eben nicht. Jede unterschiedliche Ausstattung definiert vorzugsweise ein eigenes Fertigerzeugnis, auch wenn der gedruckte Teil, also das Druckprodukt bei allen gleich sein sollte.

Die Druckprodukte können aber auch variieren. So gibt es für Zeitschriften oft eine deutsche Version Deutschland und eine deutsche Version Österreich bzw. CH-DE. In der Österreichischen Version ist dann vorzugsweise der Austria-Preis der Zeitschrift z.B. mit dem österreichischen MwSt.-Satz aufgedruckt und Verlag bzw. Medieninhaber mit Sitz in Wien statt in Berlin für Deutschland. Der Inhalt ist weitgehend gleich, nur eine Falzlage davon und der Umschlag sind oft abweichend. Bei Schweizer Versionen (CH-DE) ist es ähnlich. Nur gibt es dort dann oft noch CH-FR Versionen, d.h. der Druckteil unterscheidet sich komplett in den Texten. Die sind auf Französisch statt auf Deutsch. Hierfür - ebenso wie für englische Versionen der Zeitschrift oder des Katalogs - werden dann vorzugsweise separate Druckversionen definiert.

Deutsche und englische Versionen sind normalerweise komplett anders. Dagegen kommen bei Deutschland-deutschen und Österreich-deutschen Druckversionen oft Gleichteile vor. Diese können vorzugsweise ebenfalls in der Produktbeschreibung definiert werden. Denn die Gleichteile werden ja zusammen in einer größeren Menge hergestellt. Deutschland- und Österreich-Mengen werden vorzugsweise zusammen gedruckt und nur am Ende separat zu den lieferfähigen Fertigerzeugnissen verarbeitet.

Je nach Empfänger können für die verschiedenen Fertigerzeugnisse unterschiedliche Packvorschriften zutreffen, z.B. "nur Paletten mit maximal 600 kg packen" oder "maximale Stapelhöhe 120 cm". Oder laut Postvorschriften werden für Abonnenten von Zeitschriften die Empfänger je PLZ-Bereich vorzugsweise separat gepackt bzw. bereitgestellt. Abonnement-Exemplare werden vorzugsweise mit der Adresse des Empfängers versehen, also personalisiert, die neutrale Kiosk-Auflage dagegen vorzugsweise nicht.

Eine weitere Besonderheit in der Druckproduktherstellung ist das System der Druckfreigaben oder schlicht Freigaben. Druckprodukte werden zuerst mit Texten und Bildern elektronisch erstellt, meist in Form von PDF-Dateien. Die Druckerei macht daraus vorzugsweise Probeabzüge als Ausdrucke und lässt diese vom Kunden freigeben. Er kontrolliert diese Ausdrucke und kann die Texte nochmal Korrektur lesen, Preise auf Tippfehler prüfen, usw. Erst dann gibt er sie frei zum Druck. Dies dient der Risikoreduzierung, damit kleine Fehler nicht erst am fertigen Endprodukt auffallen, sondern schon vorher eliminiert werden können.

Die Freigaben können entweder für das ganze Produkt oder, besonders bei Katalogen und Zeitschriften, falzlagenweise erfolgen. D.h. von einem Katalog mit z.B. 1000 Seiten Umfang können die Seiten 100 bis 200 und 600 bis 900 schon gedruckt werden, während die dazwischen noch nicht freigegeben sind, weil z.B. noch Preise korrigiert werden oder Fotos fehlen. Die Druckerei kann auch keine 1000 Seiten auf einmal herstellen und beginnt vorzugsweise mit den freigegebenen Falzlagen und startet den Bindevorgang erst nach Freigabe und Druck der letzten Falzlage. Bei Zeitschriften ist die letzte Falzlage meist der aktuelle Teil am Anfang des Heftes. Dies wird erst ganz am Schluss freigegeben, oft erst 8 Stunden vor der Auslieferung des fertigen Heftes.

Die Konsequenz ist, dass nur in den noch nicht freigegebenen Teilen eines Produktes noch Änderungen vorgenommen werden können, wenn kein wegwerfen und neu produzieren bezahlt werden soll. Die Überwachung, dass z.B. zusätzliche Warenproben keine Teilung einer 32-seitigen Falzlage in 2 x 16 Seiten erfordert wird im Rahmen des Verfahrens vorzugsweise im Bereich Änderungsmanagement sichergestellt. Nur wenn keine Widersprüche auftreten, können die Änderungen akzeptiert und an die Druckerei übertragen werden.

Die Ausstattungen sollen vorzugsweise an bestimmten Stellen, z.B. einer Zeitschrift angebracht werden. Die Postkarte beispielsweise mit dem Inhalt "Fordern Sie einen Prospekt bei Ihrem Autohaus an" idealerweise genau gegenüber dem Artikel zur Vorstellung des neuen Fahrzeugmodells in einer Autozeitschrift. Diese Stelle wird meist definiert als Seitenzahl, also Postkarte auf Seite 60 ankleben. Diese Info hat aber technische Konsequenzen. Denn ankleben kann man nur am Anfang oder am Ende einer Falzlage. Genauer auf der ersten oder letzten Seite einer Falzlage. D.h. die z.B. 96 Seiten Inhalt könne nicht in einer Falzlage gedruckt werden, sondern Seite 60 steht z.B. am Ende einer Falzlage und Seite 61 bis zum Ende steht auf einer anderen Falzlage. Diese Einteilung der 96 Seiten Inhalt in Falzlagen und deren Abstimmung mit den technischen Möglichkeiten der Druckerei erfolgt vorzugsweise noch im Verlag. Die Druckerei erhält immer produzierbare Einheiten und muss nicht nochmal prüfen ob das überhaupt geht. Der Verlag kann beliebige Eingaben machen und unmögliches wird vorzugsweise sofort erkannt und dem Kunden mitgeteilt. Beispielsweise, dass an Seite 60 kein Ankleben möglich ist, sondern nur 58 oder 62. So entfallen viele Rückfragen und Verzögerungen im Herstellprozess.

Ausstattungen bringen vorzugsweise Geld für den Verlag. Er ist deshalb daran interessiert, möglichst viele davon zu verkaufen. Auch wenn sich die Kunden erst in letzter Minute dazu entschließen. Also auch kurz nach der offiziellen dead line, dem Anzeigenschluss werden noch Aufträge aus kommerziellen Gründen akzeptiert. Dass diese dann die gesamte Struktur der technischen Herstellung verändern können ist nur das Problem der Druckerei. Deshalb wird vorzugsweise die technische Machbarkeit abgeklärt und die Produktstruktur entsprechend abgeändert. Zusammen mit bogenweisen Freigaben zur Produktion werden die Details des Änderungsmanagements vorzugsweise gesteuert und vorzugsweise die Machbarkeit für die Druckerei sichergestellt. Der Start der Produktion eines Produkts ist also nicht gleichbedeutend mit der Tatsache, dass der gesamte Umfang des Endprodukts festliegt. Die Datenstrukturen des Verfahrens stellen vorzugsweise die Erfüllbarkeit dieser Anforderungen sicher.

Akzidenz ist vorzugsweise ein Sammelbegriff für sonstige Druckprodukte, die nicht Bücher, Etiketten oder Verpackungen sind. Also Broschüren, Prospekte, Kataloge, Briefbogen, Flyer, Plakate.

Ausgabe ist vorzugsweise das einzelne Produkt von Periodika, also "Zeitung vom Dienstag, 21.12.2021" oder "Zeitschrift vom Januar 2021". Eine Ausgabe entspricht vorzugsweise einem Produkt bei nicht-periodischen Objekten.

Eine Druckversion wird vorzugsweise zum Fertigerzeugnis veredelt durch das Hinzufügen von Ausstattungen. Das sind Beilagen, Beihefter, Beikleber, die bei gleichem Druckprodukt und gleicher Druckversion sich zwischen den Fertigerzeugnissen unterscheiden. Weil die Fertigerzeugnisse z.B. in unterschiedliche Regionen geliefert werden, werden vorzugsweise den regionalen Zeitungsausgaben, regional angepasste Beilagen zugegeben.

Beilagen werden dem Fertigerzeugnis vorzugsweise lose beigelegt. Beihefter werden vorzugsweise mit im Rücken festgebunden, wie Falzlagen. Beikleber werden vorzugsweise auf eine Seite aufgeklebt, z.B. Antwortpostkarten oder Warenproben für Parfüm, etc. Je nach Art der Ausstattung kann dies unterschiedliche Einflüsse auf die Falzlageneinteilung haben. Beilagen können meist in beliebiger Zahl an fast beliebiger Stelle ins Fertigerzeugnis eingefügt werden. Beihefter können nur zwischen 2 Falzlagen einfügt werden oder in der Heftmitte bei Bindeart Rückenheftung. Beikleber können nur auf der ersten oder letzten Seite einer Falzlage angebracht werden. Unter Umstünden werden 32-seitige Falzlagen deshalb in 2 je 16-seitige Falzlagen getrennt, wenn ein Beikleber auf der 16.Seite der ursprünglichen Falzlage hinzukommt. Die Prüfung ob eine Ausstattung am gewünschten Ort angebracht werden kann und welche Falzlagen notwendig bzw. möglich sind werden vorzugsweise im Rahmen der Eingabeprüfung und Falzlagenermittlung durchgeführt. Dabei liegt vorzugsweise die Preisliste der Druckerei als Beschreibung der technischen Möglichkeiten der Druckerei zugrunde. Z.B. kann der Betrieb Falzlagen zu 32 Seiten herstellen oder nur zu 16 oder 8 Seiten. Dies hängt maßgeblich von der Anzahl der Stationen des Binders ab. Jede Ausstattung, außer Beilagen, nimmt i.d.R. eine Station in Anspruch. Die Maximalzahl der Stationen darf dabei nicht überschritten werden, z.B. 8, 10 oder 12 Stationen am Sammelhefter oder 24 bis 40 Stationen am Klebebinder.

Wenn ein Druckprodukt aus mehr als einer Falzlage montiert bzw. zusammengebaut werden muss, dann nennt man diesen Vorgang binden. Es gibt verschiedene Bindearten. Die Falzlagen werden entweder durch Drahtklammern im Rücken verbunden, z.B. als Drahtheftung oder Rückenheftung, ausgeführt meist an der Maschine Sammelhefter. Oder sie werden zusammengeklebt, wobei der Rücken mit Klebstoff bestrichen wird und so zusammenhält. Die Falzlagen können auch zusammengenäht werden. Das ist eine Fadenheftung. Letztere kommt meist nur bei Büchern vor die länger halten sollen und deshalb auch die höheren Kosten der Fadenheftung hingenommen werden.

Für einteilige Produkte, also einzelne Blätter, wie Briefbogen, Visitenkarten, Plakate und Falzprospekte, diese sind nur gefalzte Bogen ohne Heftung bzw. Bindung, wird oft noch lose als formale Bindeart angegeben. Sie sind dann nach dem Schneiden bzw. falzen sofort fertig zur Verpackung, ohne Bindevorgang.

In einem Binder werden die einzelnen Falzlagen eines Produkts im Rücken vorzugsweise so verbunden, dass sie nicht mehr auseinanderfallen, sondern dauerhaft zusammenhalten. Je nach Bindeart bzw. Heftart unterscheidet man den Sammelhefter für Drahtklammern oder Drahtösen im Rücken, Drahtheftung oder Rückenheftung, Fadenheftung und Klebebindung. Sonderformen sind Spiralbindung bzw. Wire-O-Bindung mit einer Drahtspirale im Rücken und gefälzelte Produkte, die mit Klebeband im Rücken zusammengeklebt werden.

Bogen ist die allgemeine Bezeichnung für Falzbogen oder Druckbogen. Auf einem Falzbogen stehen bzw. sind enthalten eine oder mehrere Falzlagen. Der Falzbogen wird in die Falzmaschine eingelegt, dort gefalzt und unter Umständen. getrennt bei mehreren Falzlagen am Falzbogen. Ergebnis ist die gefalzte Falzlage. Diese wird anschließend i.d.R. am Binder gebunden.

Einer oder mehrere Falzbogen stehen vorzugsweise auf einem Druckbogen. Abhängig von der Größe der Falzbogen und dem maximalen Druckformat der Druckmaschine bzw. Druckpresse bzw. dem zu bedruckenden Papierbogen bzw. Rohbogen. Der Papierbogen wird eingekauft und i.d.R. im gleichen Format ohne vorherige Trennung bedruckt. Wenn mehrere Falzbogen auf dem Druckbogen stehen, werden die Druckbogen vorzugsweise mit einem Planschneider auseinandergeschnitten bevor sie z.B. gefalzt werden können. Ob einer oder mehrere Falzlagen auf dem Falzbogen und einer oder mehrere Falzbogen auf dem Druckbogen stehen hängt vom Endprodukt, dem Seitenumfang, der Falzlage und der technischen Ausstattung der Druckerei ab. Deswegen werden vorzugsweise nur Falzlagen erzeugt und das MIS-System der Druckerei erstellt daraus Falzbogen und Druckbogen und bestellt bzw. entnimmt vom Lager Papierbogen. Denn nur das MIS-System hat aktuelle Kenntnis, welche Maschinen mit welchem Formaten zum gewünschten Produktionszeitpunkt verfügbar und welche Papierformate lieferbar sind und eingesetzt werden können.

Broschüren sind vorzugsweise gebundene Produkte aus mindestens den 2 Produktteilen Inhalt und Umschlag. Grenzfall sind Hefte ohne Umschlag, z.B. Volkshochschulprogramme mit nur 32 Seiten Umfang, aber im Rücken geheftet.

Bücher bzw. Hardcover bestehen vorzugsweise aus einem oder mehreren Inhaltsteilen. Der Inhalt kann mehrere Papiersorten bestehen. Z.B. bei Kunstbänden als Buchblock und einem Festeinband bzw. einer Decke aus Karton und zwei Vorsätzen am Anfang und Ende des Inhalts bzw. Buchblocks zur Verbindung zwischen Inhalt und Buchblock und Decke. Die Decke kann bunt sein oder mit Folie als Pappband oder mit Einbandstoff oder auch Leder, etc. überzogen sein.

Bei analogem Druck werden vorzugsweise Druckplatten mit dem Inhalt der zu druckenden Seiten hergestellt. Diese werden vorzugsweise eingefärbt und übertragen die Farbe an den eingefärbten Stellen auf das Papier. Für bunte Bilder sind meist 4 Farben erforderlich, deswegen auch 4 Druckplatten, für die Farben CMYK.

Unterschiedliche gedruckte Fertigerzeugnisse werden vorzugsweise als Druckversionen definiert. Sie unterscheiden sich vorzugsweise von anderen Druckversionen auf mindestens einer Seite. Entweder hat eine Druckversion mehr oder weniger Seiten oder einen anderen Inhalt einer Seite als eine andere. Z.B. Version Deutsch-Deutschland, Deutsch-Österreich, Deutsch-Schweiz oder nach Bundesländern oder Sprachfassungen deutsch-englisch-französisch. Je Druckversion werden vorzugsweise ein oder mehrere Fertigerzeugnisse definiert.

Mehrere Druckversionen können gleiche Bestandteile bzw. Gleichteile haben. Z.B. den Inhalt einer Broschüre für Deutschland und Österreich. Der Umschlag kann wieder unterschiedlich sein, z.B. wegen unterschiedlicher Verkaufspreise einer Zeitschrift. Druckversionen können sich minimal unterscheiden. Z.B. deutsch-Deutschland und deutsch-Schweiz eines Katalogs. Dort sind als einzigem Unterschied z.B. nur die Preise in EURO und CHF ausgewiesen. Dieser Unterschied wird technisch durch Plattenwechsel erreicht. D.h. von den normal 4 Druckplatten je Druckbogen für die 4 Farben CMYK wird die Schwarzplatte in einer Version CHF hergestellt. Nach dem Druck der deutschen Version mit EURO Preisen wird die Schwarzplatte gewechselt und die Schweizer Auflage mit denselben CMY Platten, aber der CHF-Schwarzplatte gedruckt. Dies geht schneller und ist billiger als eine komplette neue CH-version mit 4 neuen, unterschiedlichen Platten. CMYK als additive Farbmischung im Farbendruck wird auch als Skala" oder Euro-Skala bezeichnet.

Druckbogen gehen vorzugsweise als weiße Papierbogen in die Druckmaschine rein und kommen bunt bedruckt wieder raus. Ein Druckbogen kann einen oder mehrere Falzbogen enthalten.

Einfache Produkte sind vorzugsweise einteilige Produkte im Gegensatz zu mehrteiligen Produkten. Einteilig sind z.B. Visitenkarten, Briefbogen, Falzprospekte oder Plakate. Mehrteilige Produkte sind gebundene Produkte wie Broschüren bestehend mindestens aus den 2 Produktteilen Umschlag und Inhalt, Kataloge, die wie Broschüren, aber einen höheren Seitenumfang aufweisen oder Bücher bzw. Hardcover.

Unter Etiketten werden vorzugsweise Nassleimetiketten und Haftetiketten unterschieden. Letztere werden auf Haftpapier mit selbstklebendem Papier auf einer Silikonfolie gedruckt und ausgestanzt. Unterformen sind ablösbare und nicht-ablösbare Haftetiketten.

Falzbogen sind vorzugsweise zu falzende Bogen die in die Falzmaschinen reingehen und als gefalzte Falzlagen wieder rauskommen. Ein Falzbogen kann eine oder mehrere Falzlagen enthalten.

Falzlagen sind vorzugsweise zusammenhängende Seiten eines Produkts in gefalzter bzw. zu falzender Form. Je nach Papiersorte und Format haben Falzlagen einen Umfang von 2 Seiten bzw. Blättern, 4 bis 32 Seiten im Bogendruck und 96 Seiten im Rollenoffsetdruck.

Die Angabe der Farbigkeit als z.B. 4/4-farbig kennzeichnet die Farbzahl auf der Vorder- und Rückseite des Produktteils. Ein 4/1 farbiger Umschlag hat 4 Farben auf der Vorderseite und 1 Farbe auf der Rückseite. Eine nur auf der Vorderseite bedruckte Postkarte, die hinten unbedruckt ist, wird als 1/0-farbig definiert.

Das auslieferungsfähige Fertigerzeugnis besteht vorzugsweise aus der entsprechenden Druckversion, z.B. deutsch oder englisch und den zugeordneten Ausstattungen. Je Fertigerzeugnis sind vorzugsweise eine oder mehrere Lieferanschriften bzw. Lieferpositionen sowie je Lieferposition je eine Verpackungsvorschrift möglich.

Zur Reduzierung des Produktionsrisikos sowohl für den Auftraggeber als auch der Druckerei wird nach der Fertigstellung der belichtungsfähigen Daten unmittelbar vor der Herstellung der Druckplatten ein Probedruck bzw. ein Proof oder Digitalproof erzeugt und an den Kunden geschickt zum abzeichnen bzw. prüfen ob alles stimmt und keine Fehler in der Datenbereitstellung passiert sind. Diese Frei zum Druck Erklärung oder kurz Freigabe verlagert das Risiko von Fehlern auf den Kunden soweit seine Daten betroffen sind.

Diese Freigaben erfolgen vorzugsweise in 3 möglichen Ausprägungen:
a) Freigabe des gesamten Produkts auf einmal. Z.B. häufig bei Broschüren, Briefbogen oder der Kunde verzichtet auf eine Freigabe, wie oft im Online-Druck;
b) Freigabe bogenweise bzw. Falzlagen- oder Druckbogenweise, wie es häufig bei großen Katalogen in großen Auflagen vorkommt. Die Druckerei kann dann diese Falzlagen bzw. Druckbogen bereits herstellen, auch wenn der Rest des Katalogs noch beim Kunden in Arbeit ist und z.B. noch Fotos gemacht werden müssen. Effekt ist eine kürzere Durchlaufzeit in der Herstellung bzw. eine kürzere Lieferzeit. Ebenfalls verlängert diese für den Kunden den Zeitraum in dem er Teile seines Produkts noch länger ändern kann. Z.B. kann er die letzten Fußballergebnisse noch auf dem letzten Bogen seiner Zeitschrift unterbringen.
c) Freigabe der Papierbestellung durch die Druckerei mit Papierbogenformaten bzw. Rollenbreiten Papier gegenüber der Papierfabrik. Ist dies erfolgt - wg. ca. 1 Monat Lieferzeit für die Papierbeschaffung ab Papierfabrik - so kann die Falzlageneinteilung immer nur diese Papiere einsetzen und muss entsprechende Falzlagen einteilen. Dies wird vorzugsweise im Verfahren der Falzlagenfindung berücksichtigt.

Klebebinder sind Maschine zur Herstellung von Produkten in der Bindeart Klebebindung.

Die Falzlagen werden bei Klebebindung im Rücken mit Leim eingestrichen und halten so zusammen.

Periodika bzw. periodisch erscheinende Titel sind Druckobjekte, wie Zeitungen oder Zeitschriften die immer wieder erscheinen mit anderen Inhalten. Die Erscheinungsweise kann täglich, wöchentlich als Wochenobjekte, monatlich als Monatsausgaben usw. sein. Nach den Vorschriften der Deutschen Post müssen Periodika mindestens 4-mal im Jahr erscheinen um die Vergünstigungen beim Porto in Anspruch nehmen zu können. Deswegen halten sich die meisten Verlage an diesen Rhythmus. Keine Periodika sind nicht-periodisch bzw. nur einmal erscheinende Druckprodukte, wie z.B. Plakate, die meisten Bücher, Prospekte, Einladungen für Veranstaltungen.

Produkt ist vorzugsweise das auslieferfähige Endprodukt in einem Druckprozess, das vom Auftraggeber an die Druckerei beauftragt wird.

Ein Projekt im Bereich Druck ist vorzugsweise die kleinste vollständige Einheit, die auf einmal von einem Auftraggeber an eine Druckerei beauftragt wird. Bei Zeitungen und Zeitschriften werden meist Jahresverträge geschlossen. Dort sind es also alle Ausgaben eines periodischen Objekts, also z.B. "Zeitschrift Januar 2021" bis "Zeitschrift Dezember 2021". Bei Briefbogen oder Visitenkarten ist das einzelne Produkt vorzugsweise mit dem Projekt identisch. Bei Mailingaktionen z.B. kann das gesamte, mit der Post versandte Mailing aus einem Anschreiben (Produkt 1) mit einer Broschüre (Produkt 2), einer Antwortmitteilung zum Abschluss eines Vertrages (Produkt 3), einer Rückhülle (Kuvert für die Antwortmitteilung, Produkt 4) und einer Versandhülle (Briefumschlag, Produkt 5) bestehen.

Wenn ein Produkt einzeln hergestellt wird, so werden dafür vorzugsweise Druckplatten hergestellt, meist 4 bei 4 Farben vorne, Rückseite weiß oder 8 bei 4 Farben jeweils auf der Vorder- und der Rückseite. Wenn mehrere unterschiedliche Visitenkarten z.B. hergestellt werden, z.B. 32 Karten mit unterschiedlichen Namen, aber auf dem gleichen Papier, so können diese vorzugsweise auf einem einzigen Druckbogen hergestellt und anschließend auseinandergeschnitten bzw. getrennt werden. Damit müssen nur noch 4 bzw. 8 Druckplatten statt 4 bzw. 8 x 32 Druckplatten hergestellt werden. Diese Kombination mehrerer unterschiedlicher Produkte mit gleichem Bedruckstoff bspw. Papier wird Sammelformenbildung genannt. Die Druckbogen sind demnach Sammelformen weil die Bestandteile aus mehreren unterschiedlichen Kundenaufträgen dort gesammelt wurden. Das bekannteste Geschäftsmodell mit Sammelformen sind die sog. Online-Drucker: Über die eingesparten Druckplatten und Rüstzeiten der Maschinen bieten diese zu erheblich niedrigeren Preisen gegenüber dem früher vorherrschenden Vorgehen Druckbogen = Kundenauftrag am Markt an. Visitenkarten kosten dann statt früheren 250 EUR nur noch weniger als 20 EUR für Endkunden.

Mit einem Sammelhefter als Bindemaschine werden vorzugsweise einzelne Falzlagen zusammengetragen bzw. gesammelt und mit Drahtklammern oder Ösen durch den Rücken geheftet, auf 3 Seiten außer dem Rücken beschnitten und anschließend verpackt.

Teile bzw. Produktteile sind vorzugsweise die Bestandteile einer Druckversion. Einfache Druckprodukte haben nur ein Teil, z.B. Briefbogen, Plakate, Ansichtskarten, andere haben 2 oder mehr Teile, z.B. Umschlag, Inhalt bei Broschüren oder Decke, Buchblock, Vorsatz bei Büchern.

Titel sind vorzugsweise einzelne Objekte unterschieden meist durch die Überschrift eines Buches oder der Name einer Zeitung bzw. Zeitschrift.

Eine Verpackungsvorschrift beschreibt vorzugsweise die Verpackung eines Fertigerzeugnisses einschließlich Transportverpackung der Sendung. Mehrere Hierarchiestufen bzw. Handling Units sind möglich. Z.B. 3-stufig als einzeln eingeschweißt (Stufe 1), zu 5 Stück in Kartons verpackt (Stufe 2), auf EURO-Tauschpaletten abgesetzt (Stufe 3).

Weitere Vorteile, Merkmale und Effekte der vorliegenden Erfindung ergeben sich aus der nachstehenden Beschreibung bevorzugter Ausführungsbeispiele unter Bezugnahme auf die Figuren, in welchen gleiche oder ähnliche Bauteile durch dieselben Bezugszeichen bezeichnet sind. Hierbei zeigen:
- Fig. 1:: eine Ausführungsform einer abstrakten Datenstruktur;
- Fig. 2:: eine weitere Ausführungsform einer abstrakten Datenstruktur.
- Fig. 3:: einen beispielhaften Ablauf eines Verfahrens zur Herstellung eines Druckprodukts.
- Fig. 4:: einen weiteren beispielhaften Ablauf eines Verfahrens zur Herstellung eines Druckprodukts.

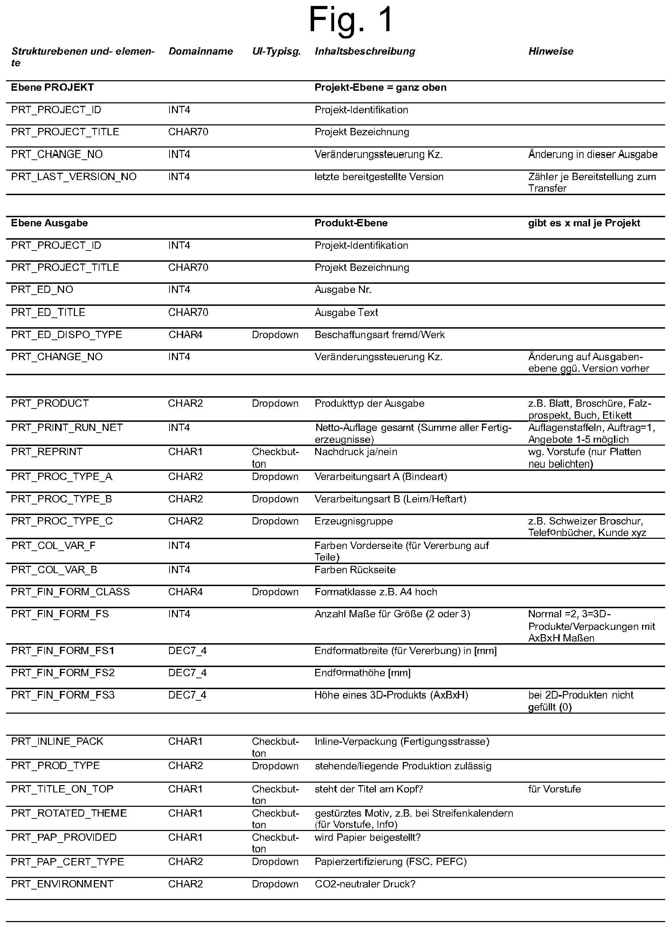

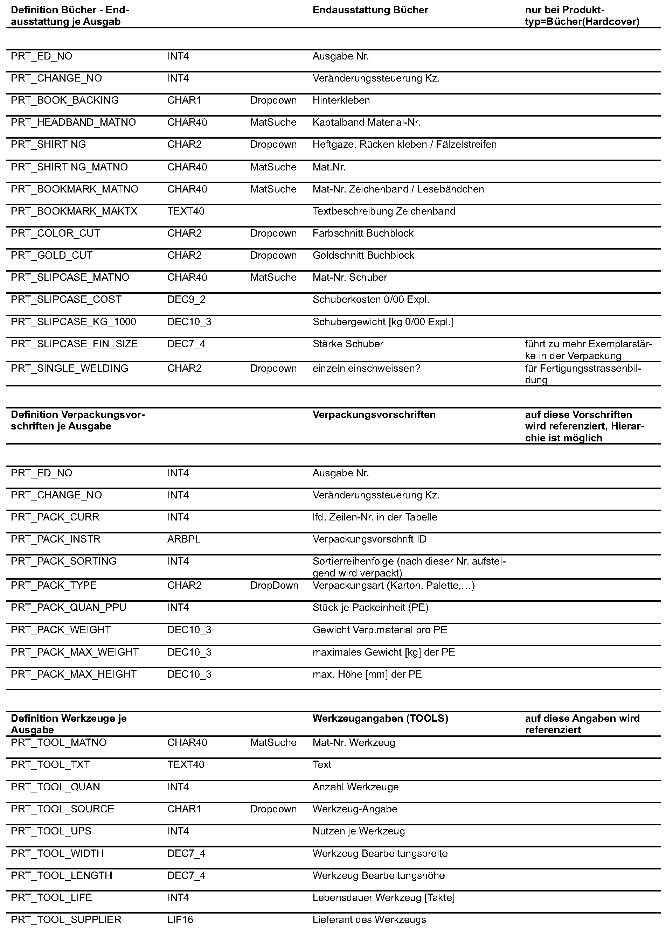

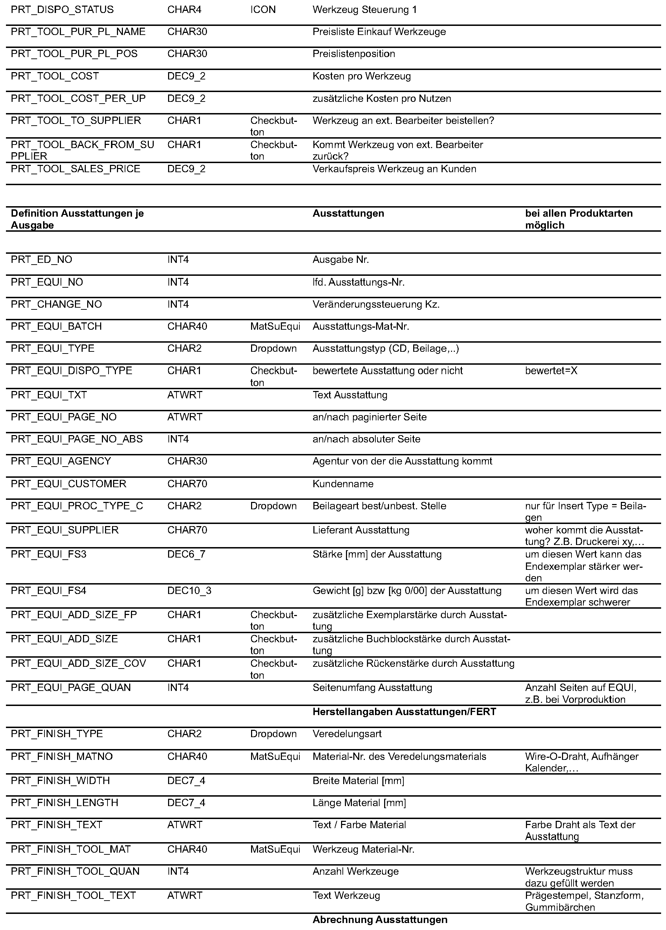

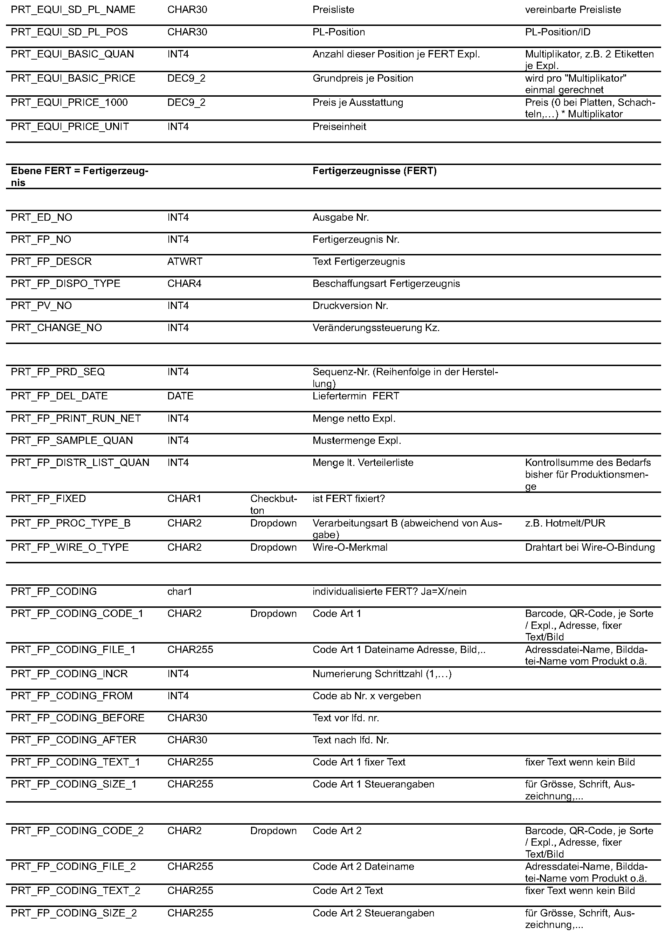

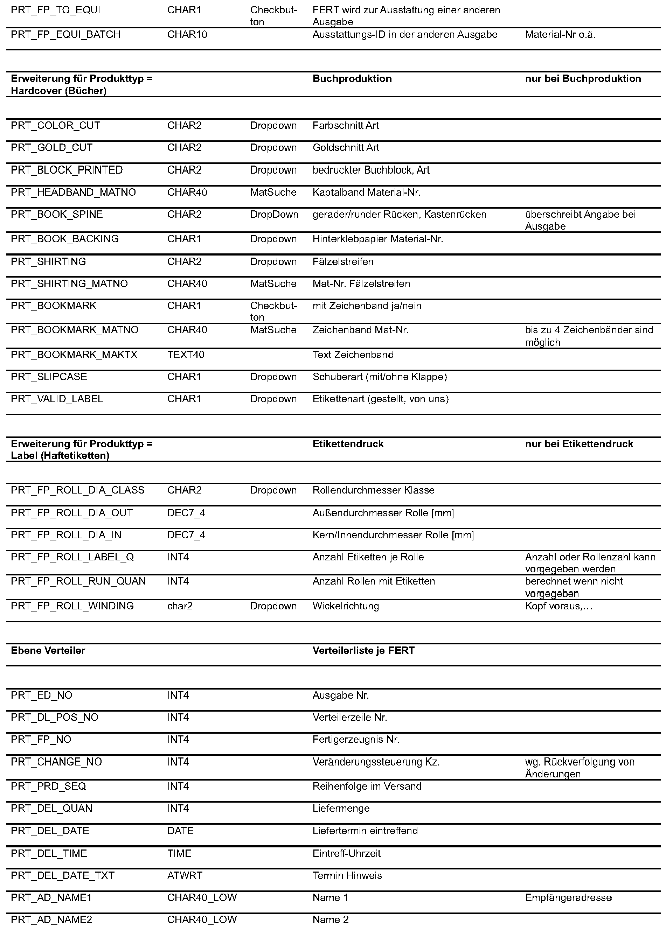

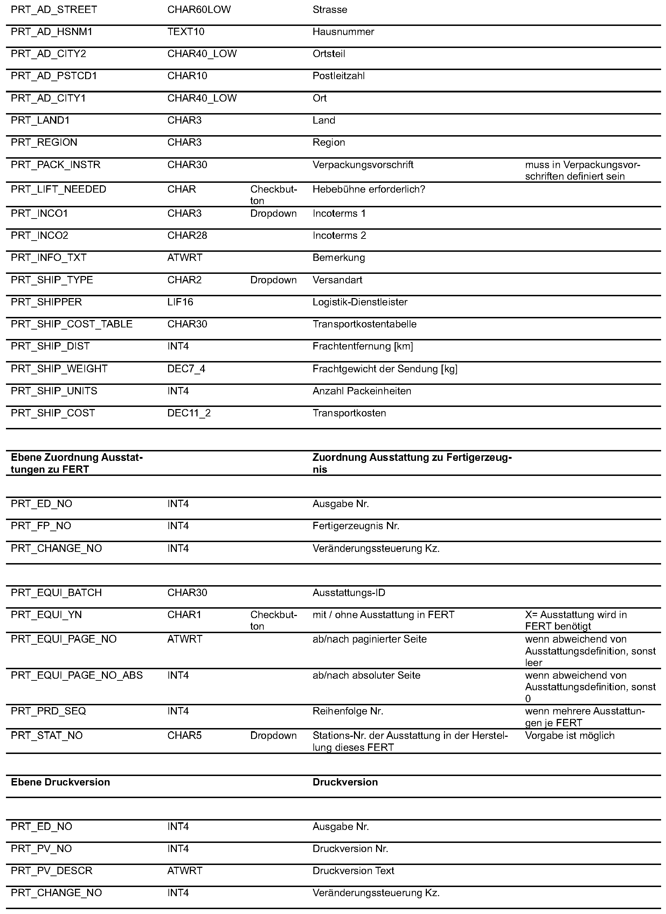

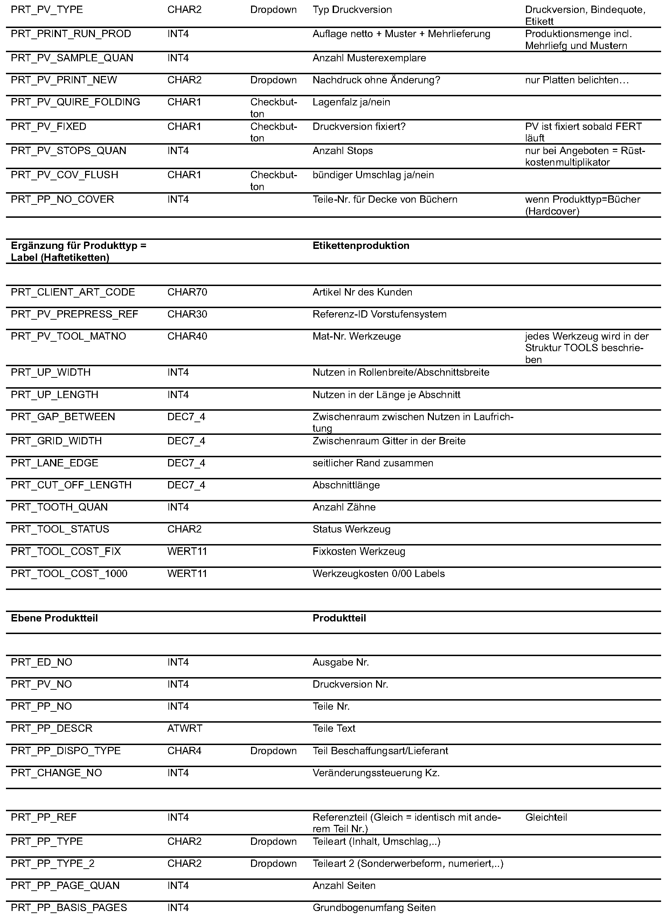

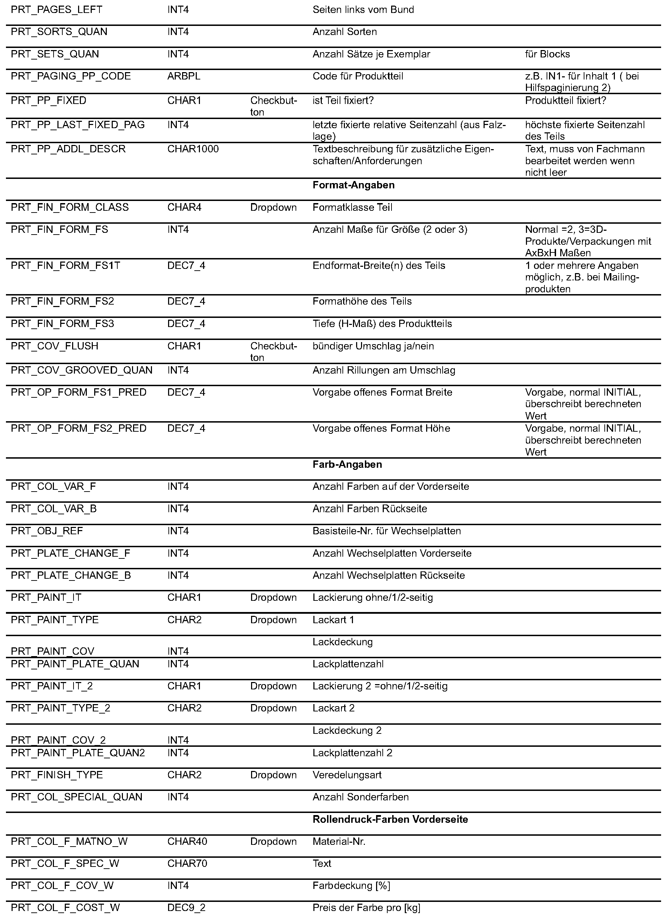

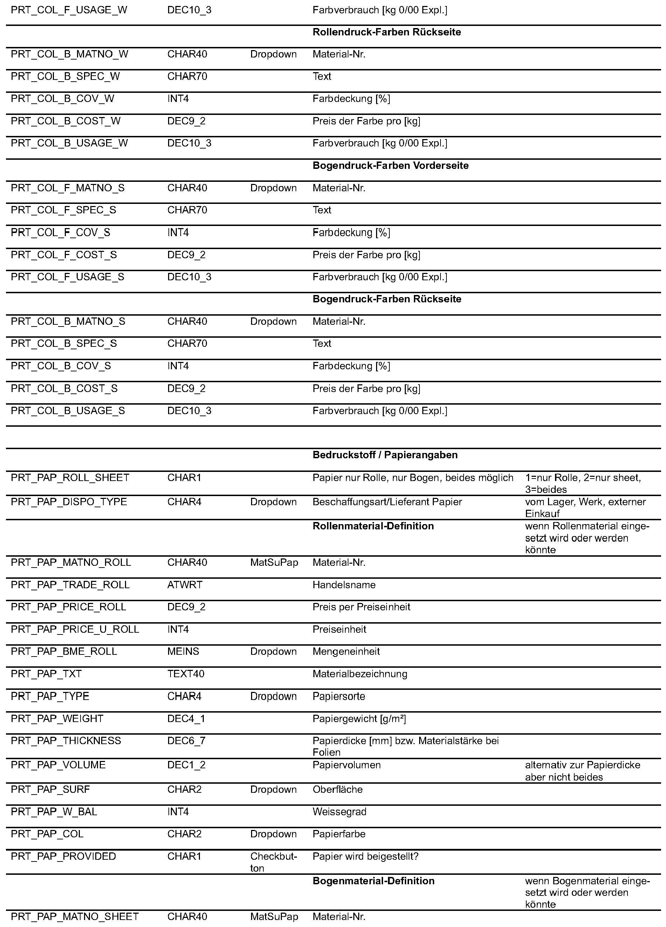

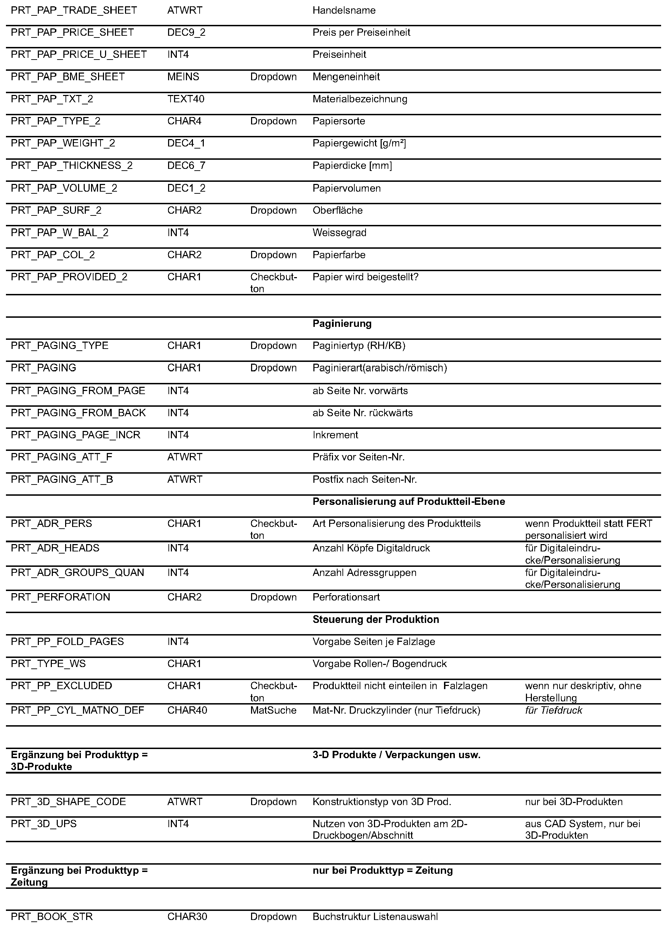

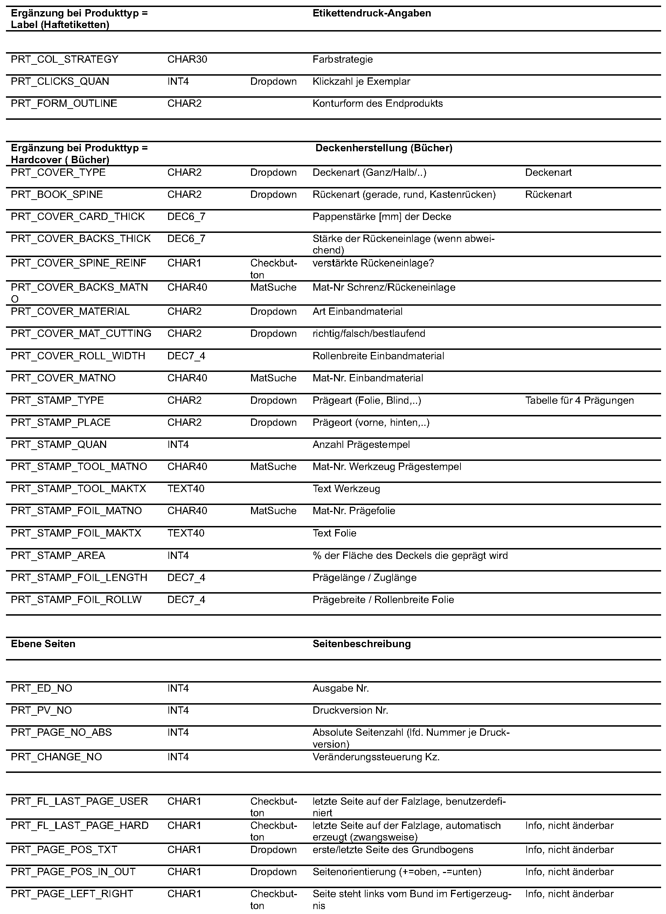

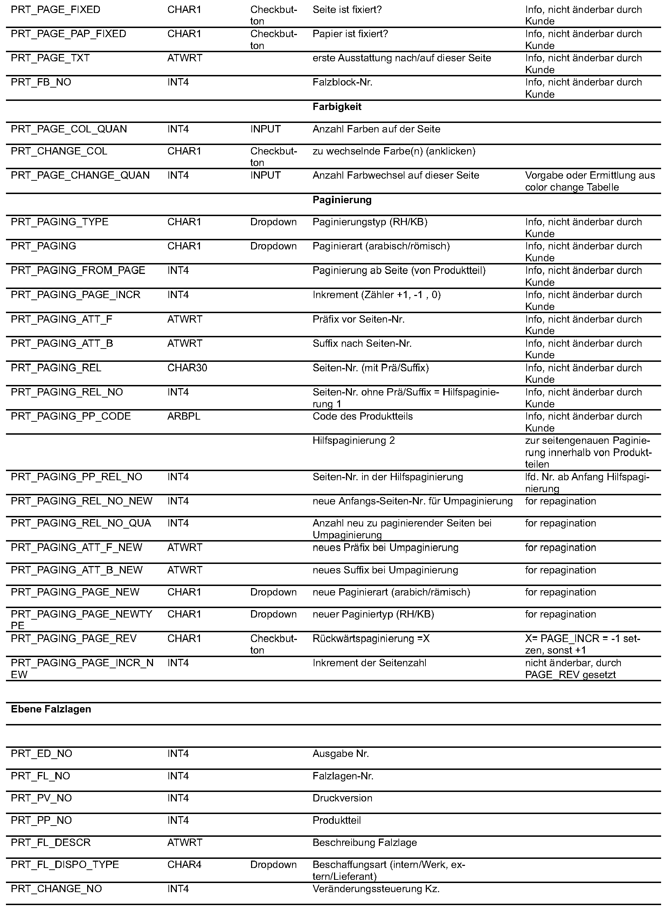

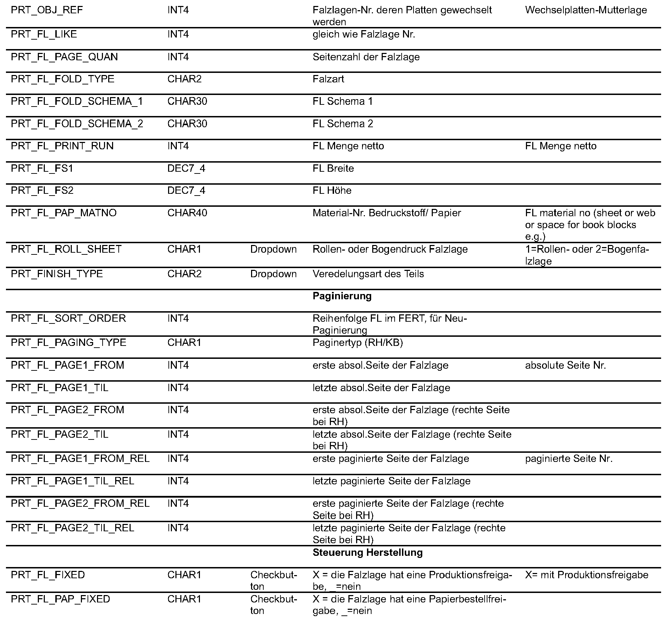

Fig. 1 zeigt eine Ausführungsform einer abstrakten Datenstruktur in Form einer Tabelle.

Die oberste Zeile der Tabelle in Fig. 1 zeigt kursiv und fett gedruckt die Spaltenüberschriften.

In der jeweiligen Spalte dünn gedruckt sind die Strukturelemente, Domains, UI-Typisierungen sowie dazu jeweils passende Inhaltsbeschreibungen und Hinweise.

Fett gedruckt in der jeweiligen Spalte sind die Strukturebenen und deren Inhaltsbeschreibungen und Hinweise.

In der Strukturebene Projekt sind die Strukturelemente PRT_PROJECT_ID, PRT_PROJECT TITLE, PRT_CHANGE_NO und PRT_LAST VERSION_NO vorhanden.

In der Strukturebene Ausgabe sind die Strukturelemente PRT_PROJECT_ID, PRT_PROJECT TITLE, PRT_ED_NO, usw.

Diese Systematik ist in der gesamten Fig. 1 erkennbar.

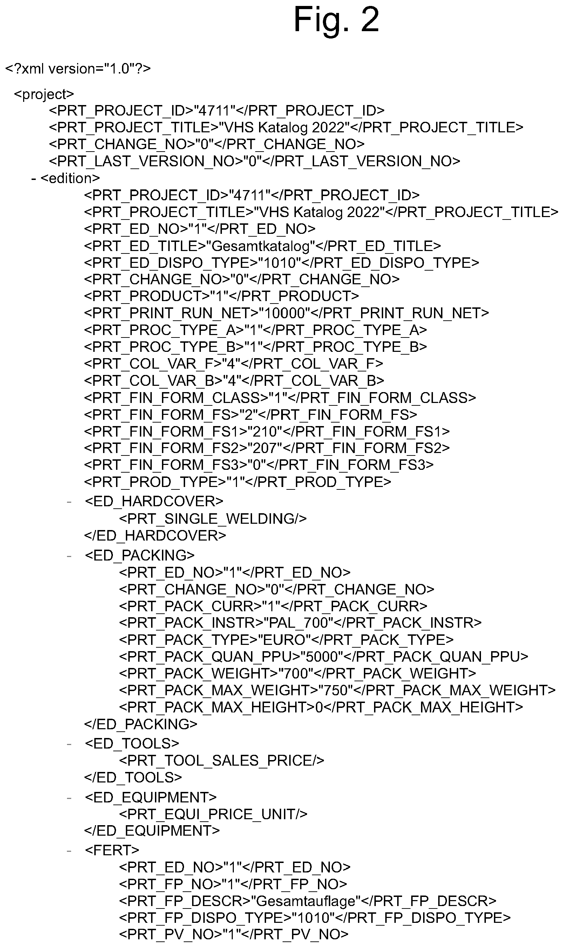

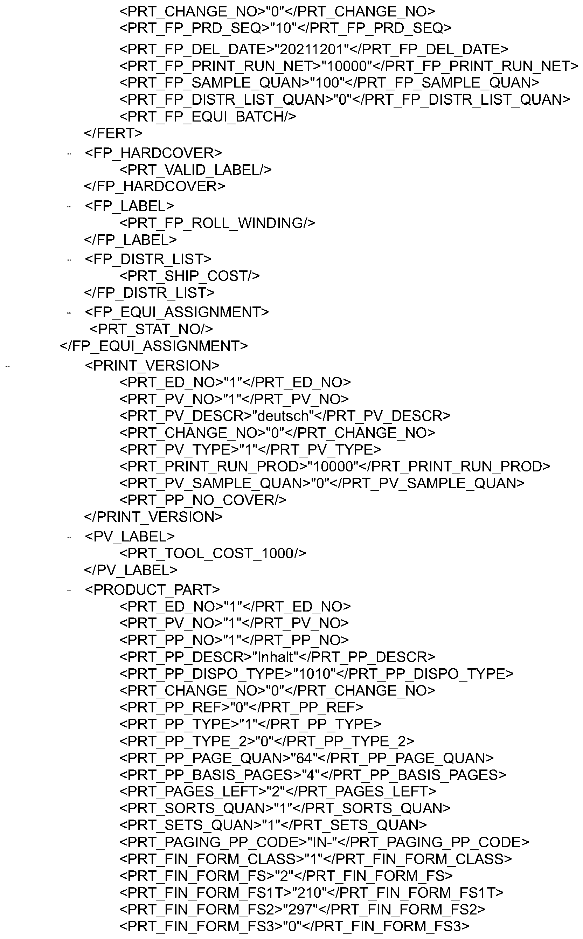

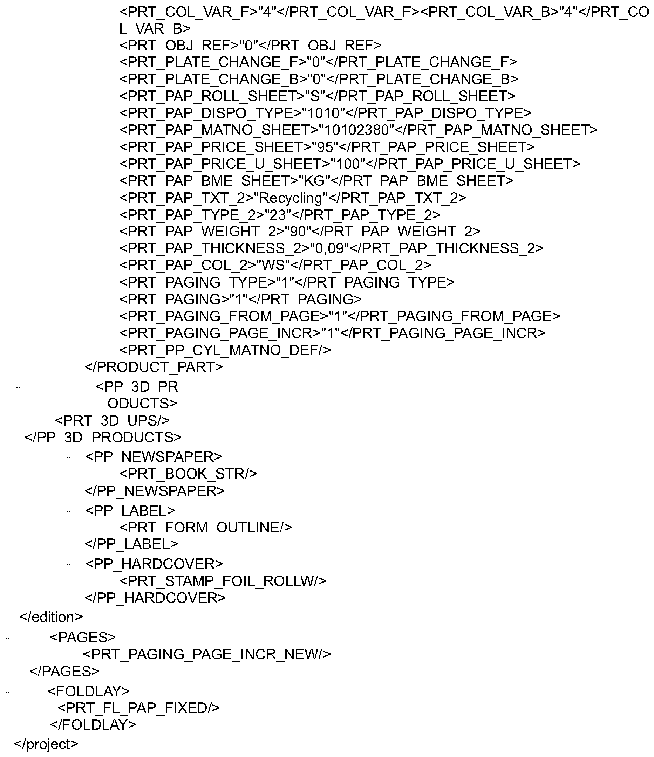

Fig. 2 zeigt eine Ausführungsform einer abstrakten Datenstruktur in Form einer Beschreibung in der Extensible Markup Language (XML).

Die Extensible Markup Language ist eine Auszeichnungssprache zur Darstellung hierarchisch strukturierter Daten im Format einer Textdatei, die sowohl von Menschen als auch von Maschinen lesbar ist.

Über die Klammerung durch <project> und </project> wird die Projektebene definiert. Alle Ebenen und Elemente innerhalb dieser Klammer sind unter der Projektebene angesiedelt. Dies gilt ebenso für die anderen Ebenen, die durch solche Klammern definiert werden.

Auch die Elemente werden durch diese Art von Klammern definiert. So bedeutet "<PRT_PROJECT_ID>"4711"</PRT_PROJECT_ID>", dass das Element PRT_PROJECT_ID die Nummer 4711 aufweist. Dies gilt ebenso für die anderen Elemente, die durch solche Klammern definiert werden.

Ein weiteres Ausführungsbeispiel ohne passende Figur betrifft einen möglichen Ablauf für das Herstellungsverfahren eines Druckprodukts.

Das Projekt als oberste Ebene beschreibt vorzugsweise eine Bestellung oder einen Kundenauftrag. Innerhalb des Projekts werden vorzugsweise mehrere Produkte also Einmalaufträge oder Ausgaben im Falle von Druckprodukten in Formen von Periodika beschrieben.

Ein Projekt kann beispielsweise eine Zeitschrift mit Ausgaben im Januar, Februar, usw. sein.

Ein Projekt kann beispielsweise auch eine Werbeaktion sein, bei der eine Informationsbroschüre mit 4 + 32 Seiten, ein Anschreiben mit 2 Seiten und eine Versandhülle (Briefumschlag) im Format C4 benötigt werden.

Jedes Projekt besteht vorzugsweise aus einem oder mehreren Produkten bzw. Ausgaben oder Periodika. Diese müssen keine technischen Gemeinsamkeiten haben. Jede Ausgabe wird als eigenes Druckprodukt beschrieben.

Jedes Druckprodukt hat vorzugsweise eine definierte Bindeart. Im Zweifel lose, wenn nicht gebunden wird. Eine Zeitschrift kann zum Beispiel in der Bindeart Rückenheftung vorliegen.

Druckversionen unterscheiden sich vorzugsweise in Inhalt oder Umfang. Eine Druckversion einer Zeitschrift kann beispielsweise die deutsche Ausgabe mit einer Auflage von 70.000 Exemplaren, eine andere Druckversion der Zeitschrift kann beispielsweise die deutschschweizerische Ausgabe mit einer Auflage von 8.000 Exemplaren und eine weitere Druckversion der Zeitschrift kann beispielsweise die französischschweizerische Ausgabe mit einer Auflage von 2.000 Exemplaren sein.

Druckversionen umfassen vorzugsweise wiederum Produktteile. Produktteile einer dieser Druckversionen können der Inhalt mit beispielsweise 96 Seiten A4 hoch, 4/4 farbig bedruckt, ein Umschlag A4 hoch mit 4 Seiten, 5/5 farbig bedruckt und eine Postkarte im Format A6 quer, 1/1 farbig bedruckt sein. Die Angabe 4/4 z.B. kennzeichnet die Farbzahl auf der Vorder- und Rückseite des Produktteils. Ein 4/1 farbiger Umschlag hat 4 Farben auf der Vorderseite und 1 Farbe auf der Rückseite. Eine nur auf der Vorderseite bedruckte Postkarte (hinten weiß) wird als 1/0-farbig definiert.

Die einzelnen Produktteile umfassen vorzugsweise wiederum Seiten. Diese können beispielswiese ab einer bestimmten Seite arabisch paginiert sein und in Rückenheftung geheftet sein.

Produktteile umfassen vorzugsweise den Bedruckstoff, der Papier sein kann. Gleichteile zwischen verschiedenen Produktteilen sind denkbar.

Druckversionen sind der gedruckte Teil des auszuliefernden Produkts.

Ausstattungen sind Beihefter, Beikleber, CDs und/oder DVDs, gestellte Beilagen, etc. des auszuliefernden Produkts.

Eine Zeitschrift kann beispielsweise als Ausstattungen eine DVD und eine Parfümprobe enthalten.

Druckversion und Ausstattungen ergeben das Fertigerzeugnis, welches vorzugsweise das auszuliefernde Produkt ist.

Fertigerzeugnis und Verpackungsvorschrift und Versandadresse ergeben die Sendung als versandfertiges Endprodukt.

Verpackungsvorschriften ergeben vorzugsweise mehrstufige Handling Units.

Beispielsweise ist eine Handling Unit ein Vollpaket mit 25 Exemplaren (HU 1) einer Zeitschrift, welche auf Tauschpaletten gestapelt werden können. Die Tauschpalette ist hier HU 2 der Verpackungsvorschrift. Jede HU2 besteht aus einer oder mehreren HU1 Einheiten.

Versandadressen sind vorzugsweise Verteiler- und/oder Empfängerlisten.

Das beispielhafte Projekt im Akzidenzdruck wird vorzugsweise über eine 7-stufige abstrakte Datenstruktur definiert:
1. Ein Projekt ist vorzugsweise die oberste Gruppierungsebene für alle hierarchisch untergeordneten Druckerzeugnisse. Hier können Parameter mit Gültigkeit für die gesamte abstrakte Datenstruktur festgelegt werden, z.B. ob ein Einmalauftrag oder eine periodische Bestellung vorliegt.
2. Ein Produkt oder eine Ausgabe fasst vorzugsweise alle lieferfähigen Druckprodukte zusammen. Z.B. ist ein Produkt oder eine Ausgabe ein Katalog, Prospekt oder Ausgabe einer Zeitschrift. Auf Produktebene wird vorzugsweise die Bindeart definiert, z.B. Rückenheftung oder Klebebindung.
3. Eine Druckversion stellt vorzugsweise unterschiedliche Ausprägungen des Druckproduktes im Druck dar, z.B. in Form unterschiedlicher Vertriebswege, Sprachversionen oder regionalen Ausgaben.
4. Ein Produktteil ist vorzugsweise die Untergliederung des Druckproduktes in einzelne Bestandteile, z.B. in Umschlag, Inhalt und Antwortkarte.
5. Das Endprodukt wird vorzugsweise bis auf Seitenebene genau definiert, z.B. welches Papier, welche Farbigkeit oder welcher Plattenwechsel Verwendung finden und paginiert.
6. Falzlagen dienen vorzugsweise der technischen Einteilung eines Produktteils zum Zusammentragen Z.B. kann ein 96-seitiger Inhalt in 3 Falzlagen zu je 32 Seiten hergestellt werden. Falzlagen werden vorzugsweise im Rahmen der Produktionswegefindung aus Seiten und Ausstattungen erzeugt oder ausgeschossen.
7. Das Fertigerzeugnis beschreibt vorzugsweise das lieferfähige Druckprodukt in einer speziellen Ausprägung auf Basis einer Druckversion mit unterschiedlichen Ausstattungen. Ausstattungen sind z.B. CDs, DVDs, Beihefter, Beikleber oder Sondennrerbeformen.

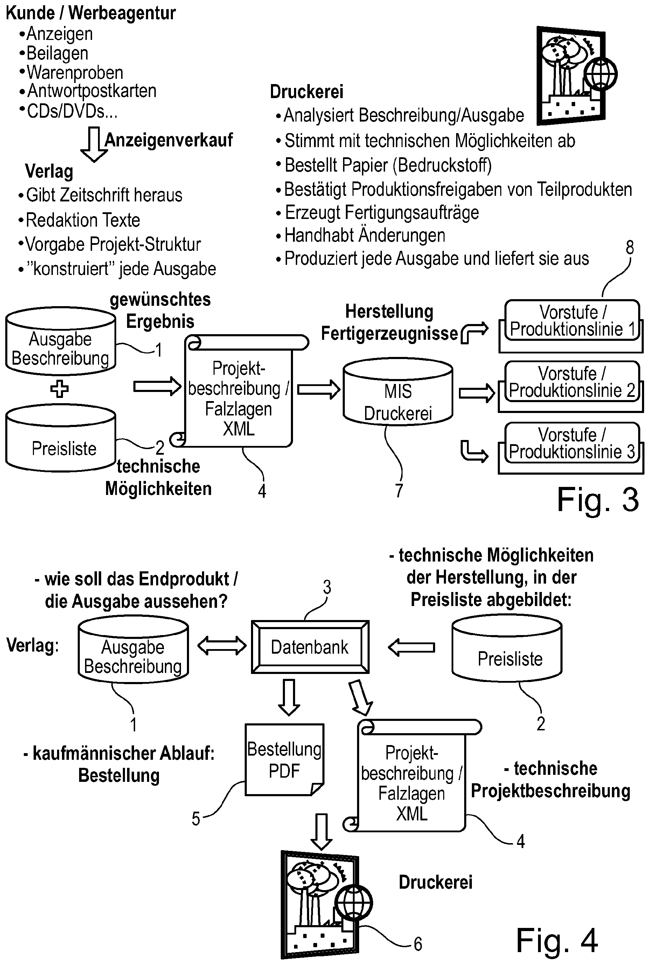

In Fig. 3 ist ein beispielhafter Ablauf für ein Verfahren zur unternehmensübergreifenden Verbesserung der technischen Herstellprozesse zwischen Verlagen und Druckereien zu sehen.

Die Zielsetzung dabei ist weniger Gesamtaufwand in der technischen Herstellung.

Ein möglicher Lösungsansatz ist die Einführung von automatisiertes Prozesse in der Abstimmung Verlag Druckerei.

Ein Verlag beschreibt in der Ausgabenbeschreibung 1 das gewünscht Ergebnis in welches die Bestellung eines Kunden einfließen kann. Zusammen mit den technischen Möglichkeiten in Form der Preisliste 2 ergibt sich eine technische Projektbeschreibung 4 bzw. Falzlagen, vorzugsweise im XML-Format. Diese wird im MIS 7 der Druckerei umgewandelt, so dass Fertigerzeugnisse erzeugt werden können. Diese Fertigerzeugnisse werden in den Vorstufen 8 der entsprechenden Produktionslinie erzeugt.

Fig. 4 zeigt ein mögliches Zusammenspiel von Ausgabenbeschreibung 1, Preisliste 2 und einer Datenbank 3. Aus der Datenbank 3 werden nach Eingabe der Ausgabenbeschreibung 1 und der Preisliste 2 eine technische Projektbeschreibung 4 und/oder eine Bestellung 5 vorzugsweise im PDF-Format. Die technische Projektbeschreibung 4 und/oder die Bestellung 5 werden dann an eine Druckerei 6 weitergeleitet.

Ein Beispiel einer technischen Projektbeschreibung 4 könnte in Form einer klassischen Textbeschreibung folgenden Inhalt aufweisen:

### Zeitschrift - Ausgabe Februar 2022

| Produkt | Zeitschrift | |
|---|---|---|
| Bindeart | Klebebindung | |
| Druckversionen | 50.000 deutsch, 10.000 englisch | |
| Produktteile je DV | 4 S. Umschlag A4 5/5-fbg. Skala + Drucklack beidseitig | |
| | 96 S. Inhalt A4 4/4-fbg. Skala | |
| Ausstattungen (je FERT) | Warenproben auf Seite 60 | |
| | Antwortpostkarte an Seite 98 | |
| | Prospekt als Beilage an beliebiger Stelle | |
| Fertigerzeugnisse (FERT) | deutsch | 30.450 Abo Auflage mit allen Ausstattungen |
| | | 19.300 Kiosk-Auflage ohne Warenprobe |
| | | 250 Muster an Verlag |
| | englisch | 9.500 Kiosk-Auflage mit PK englisch, |
| | | Warenprobe englisch |
| | | 500 Muster an Verlag |
| Versand | PAL Abo Auflage lt. Terminplan nach PLZ sortiert Kiosk Auflage wird abgeholt | |

Die Preisliste 2 könnte enthalten:
o Stammdaten (Geschäftspartner, Objekte/Zeitschriften)
o Preise je Leistungsposition
o Technische Möglichkeiten (Seiten je Falzlage, Stationen am Binder)
o Zuschusswerte für Materialbereitstellung
o etc.

Die vereinbarte Preisliste könnte auch die technischen Produktionsmöglichkeiten wie folgt enthalten:

| Objekt: | Zeitschrift ab Jahrgang 2022 | | | | |
|---|---|---|---|---|---|
| | | | | **Grundpreis** | **0/00 Expl.** |
| Bogendruck | Umschlag (US) | 4 Seiten | 4/4 | 500 EUR | 50 EUR |
| | | | 5/5 | 600 EUR | 55 EUR |
| Rollenoffset | Inhalt | 16 Seiten | 4/4 | 800 EUR | 22 EUR |
| | | | 5/5 | 950 EUR | 24 EUR |
| | | 32 Seiten | 4/4 | 1.200 EUR | 32 EUR |
| | | 48 Seiten | 4/4 | 1.500 EUR | 41 EUR |
| | | 64 Seiten | 4/4 | 1.800 EUR | 48 EUR |
| Rückenheftung | US + 1 Station | | | 100 EUR | 15 EUR |
| | US + 2 Stat. | | | 120 EUR | 17 EUR |
| | US + 8 Stat. | | | 250 EUR | 35 EUR |
| Klebebindung | US + bis 3 Stationen | | | 400 EUR | 50 EUR |
| | US + bis 6 Stationen | | | 500 EUR | 65 EUR |
| | US + bis 24 Stationen | | | 1.500 EUR | 145 EUR |
| Beilagen pro Stück | | | | 50 EUR | 10 EUR |
| Vollpakete, je Paket | | | | | 5 EUR |
| EURO-Tausch-Paletten, je Palette | | | | | 35 EUR |

Textbeschreibung einer Ausgabe könnte wie folgt aussehen:
Ausgabe Februar 2021

| | | |
|---|---|---|
| Umschlag | FB4 | 4 Seiten Bogendruck 5/5-farbig |
| Inhalt | FR64 | 64 Seiten Rolle 4/4-farbig |
| | FR16 | 16 Seiten Rolle 4/4-farbig |
| | FR16 | 16 Seiten Rolle 4/4-farbig |
| Fertigerzeugnisse | deutsch US + 4 Stationen Klebebindung + 1 Beilage | |
| | englisch US + 3 Stationen KB | |

| | | |
|---|---|---|
| Verpackung nach Aufwand/PLZ-Sortierung, Kostensätze lt. Preisliste | | |

Eine XML-Beschreibung in maschinenlesbarer Form wird auf Verlagsseite vorzugsweise automatisch im Verfahren erzeugt und der Druckerei zur Verfügung gestellt. Dort wird sie in das vorhandene MIS eingelesen. Das MIS erstellt die notwendigen Fertigungsaufträge und leitet sie automatisiert z.B. an die Vorstufe zur Plattenherstellung weiter.

Änderungsmanagement ist die Kommunikation der Änderungen am Produkt im Laufe des Herstellprozesses einer Ausgabe zwischen Verlag und Druckerei (z.B. weitere Beilagen von Kundenseite, etc.).

Grundlage ist vorzugsweise die Produktdefinition die von Verlag an Druckerei gesendet wurde.

Druckfreigaben einzelner und/oder aller Falzlagen und/oder von Produktteilen können erfolgen.

Die uu prüfende Logik ist vorzugsweise, welche Teile des Produkts sind noch änderbar.

Änderungen werden vorzugsweise vom Auftraggeber (Verlag) erfasst in eine Datenbank.

Die Prüfung erfolgt vorzugsweise mit künstlicher Intelligenz (Regelwerk) im Verlag, z.B. werden folgende Fragen geprüft.

Ist auch das geänderte Produkt noch herstellbar?

Werden keine bereits fixierten bzw. produzierten Teile verändert?

Kann die Druckerei das Produkt noch herstellen?

Sind genug Stationen vorhanden?

Die Bereitstellung der Änderungen erfolgt vorzugsweise für Bestelländerung (Druckerei, Papierbeistellung) aus rechtlichen Gründen und es wird vorzugsweise neue XML-Datei mit aktualisierter und geprüfter technischer Struktur erstellt.

Folgende Effekte der Prozessverbesserung auf Verlagsseite sind denkbar:
- Strukturierte Erfassung jeder Ausgabe statt Fließtext.
- Sofortige Prüfung im Anzeigenverkauf auf technische Machbarkeit.
- Aktualisierung lt. Vertriebserfolg, etwa der Beilagen oder Beihefter.
- Sichere Prüfung erfordert keine zusätzlichen Spezialisten. Denkbar ist eine künstliche Intelligenz im Verfahren.
- Druckerei erhält exakte Anweisungen. Planbare Kosten für beide Seiten.
- Sicheres Änderungsmanagement.
- Einfache Abrechnung mit vorhersehbaren Kosten und Ergebniskontrolle.

Folgende Effekte der Prozessverbesserung auf Druckereiseite sind denkbar:
- Genaue Produktspezifikation, daher vorzugsweise keine Rückfragen.
- Technische Machbarkeit ist gesichert.
- Automatische Daten-Übernahme in MIS/ERP möglich.
- Optimierung in der Produktion machbar. Beispielsweise statt 2 x 16 Seiten, 1 x 32 Seiten drucken, weil billiger.
- Weniger manueller Bearbeitungsaufwand.
- Jederzeit aktuelle Produktbeschreibung verfügbar.
- Änderungen verursachen weniger Aufwand.
- mögliche Probleme werden bereits im Verlag geklärt.
- Kosteneinsparungen decken die Preissenkungen.
- Einfache Abrechnung und Ergebniskontrolle.

In anderen Worten lässt sich die vorliegende Erfindung auf nicht beschränkende Weise sondern rein beispielhaft wie folgt beschreiben:
Ein erfindungsgemäßes Verfahren erzeugt vorzugsweise aus der Produktbeschreibung einen "digitalen Zwilling" des aktuellen Zustands des Produkts und ermittelt sämtliche bis zum Abschluss der Herstellung des Produkts erforderlichen Arbeitsgänge und Zwischenschritte. Wenn es mehr als einen technisch möglichen Produktionsweg gibt, werden auch diese ermittelt und dargestellt.

Der Produktionsweg eines Druckprodukts besteht vorzugsweise zumindest aus den Fertigungsstufen
- Druck,
- Vorrichten,
- Verarbeitung und
- Verpackung/Versand.

Es genügt nicht, nur technisch mögliche Druckwege zu finden. Die Verarbeitung hat unter Umständen eigene Einschränkungen, die die Drucklegung ("Ausschiessen", d.h. Einteilung der Seiten des Produkts in produzierbare "Falzlagen") beeinflussen und die Zwischenschritte zwischen Beiden ("Vorrichten") erfordern. Diese Veränderungen haben wieder Rückwirkungen darauf, welche Seiten des Endprodukts auf welche Falzlage gedruckt werden. Erst wenn diese Zuordnung Seite zu Falzlage genau feststeht, ist das Ziel einer automatisierten Produktion erreichbar.

Bisher ist dies mit keiner herkömmlichen technischen Lösung erreichbar. Deswegen muss alles noch manuell von entsprechend qualifizierten Fachleuten abgewickelt werden.

Vorzugsweise weist ist somit entweder die erste und / oder die zweite Steuerungseinheit dazu ausgelegt, zu bestimmen, welche Seiten eines Druckprodukts auf welche Falzlage zu drucken sind und einen entsprechenden Steuerungsbefehl an eine Druckmaschine auszugeben.

### Beispiel:

Druckprodukte werden in einzelnen "Bogen" mit jeweils einer oder mehreren "Falzlagen" gedruckt (z.B. im Druckformat 88 x 63 cm, Breite x Höhe). Diese Falzlagen werden gefaltet ("gefalzt") auf ein an das Endformat angelehntes Format (z.B. 21 × 29,7 cm bei A4). Anschließend werden sie "zusammengetragen" (alle gefalzten Falzlagen eines Buchs z.B. werden hintereinander sortiert je Exemplar) und dann zusammengebunden. Das kann als "Klebebindung" erfolgen (Falzlagen werden am Rücken mit Klebstoff bestrichen damit sie zusammenhalten), als Rückenheftung (dünnere Produkte werden ähnlich wie mit Büro-Heftklammern "zusammengetackert"), oder als "Fadenheftung". Hier werden die Falzlagen "aneinander genäht" damit die Produkte länger haltbar sind als mit Klebebindung.

Hochwertige Bücher (Bildbände usw.) werden oft in der Bindeart "Fadenheftung" hergestellt. Je nach Struktur des Produkts können dabei Falzlagen z.B. zu 32 Seiten, zu 4 oder 8 Seiten eingeteilt werden. Wenn der Fall 4+32 Seiten vorliegt, so muss die 4-seitige Falzlage beim Zwischenschritt "Vorrichten" an den 32-Seiter angeklebt werden. Vorne oder hinten, abhängig von weiteren Kriterien. Das hat zur Folge, dass im Druck nicht die Seiten 1-32 auf dem 32-Seiter und 33 bis 36 auf dem 4 Seiten stehen dürfen, sondern dass die Seiten 1-4 auf dem 4-Seiter und 5 bis 36 auf dem 32 Seiten stehen (gedruckt sein) müssen. Sonst wäre der Sinngehalt des fertigen Druckprodukts zerstört.

Bei 8+32 Seiten dagegen muss der 8-Seiter um den 32-Seiter "umgelegt" werden im Rahmen des "Vorrichtens". D.h. die "linken 4 Seiten" (nach Paginierung) stehen vor den 32 Seiten, die "rechten 4 Seiten" des 8-Seiters stehen danach. D.h. auf den 8-Seiter werden die Seiten 1 bis 4 und 37 bis 40 gedruckt. Die Seiten 5 bis 36 stehen auf dem 32 Seiten

All diese Anforderungen in späteren Arbeitsschritten wirken auf vorhergehende Konstruktionsmerkmale zurück. Sie werden im "Zwilling" für jeden technisch möglichen Herstellweg ermittelt und bei der "Konstruktion des Produktionsablaufs" berücksichtigt. Nur dann ist eine durchgängige Produktion ohne manuellen Eingriff möglich. Mit einem erfindungsgemäßen Verfahren ist diese Voraussetzung für eine erfolgreiche Automatisierung des Prozessablaufs gegeben bzw. der automatisierte Ablauf kann damit realisiert werden.

Zusätzlich unterstützt der "Zwilling" die nachträgliche Änderung an der Produktspezifikation. So kann es vorkommen, dass eine 32 seitige Falzlage in einer Zeitschrift vor der Produktion noch in 2 x 16 Seiten geteilt werden muss, weil ein Kunde auf der Seite 17 eine Antwortpostkarte oder eine Warenprobe angeklebt haben will. Das Ankleben ist nur auf der ersten Seite einer Falzlage möglich, deswegen ist die Teilung erforderlich. Der Zwilling prüft, ob der 32-Seiter noch nicht in der Produktion ist, ob sich keine anderen Seiten dadurch ändern usw., dass ein Aggregat zum Binden zur Verfügung steht (es müssen 2 Falzlagen statt nur 1 "zusammengetragen" und die Karte bzw. Warenprobe in einer 3.Station angeklebt werden; bei Produkten mit mehreren Falzlagen könnten hier technischen Grenzen überschritten werden.)

Die vorliegende Erfindung ermöglicht es somit vorzugsweise:
1) "beliebige Produkte" zur Herstellung zuzulassen, ohne dass diese vorher in ihrer Struktur fest vorgegeben sein müssen,
2) dynamisch alle technisch möglichen Produktionswege mit allen Arbeitsschritten zu ermitteln und
3) über ein Änderungsmanagement auch während der Produktion einzelner Produktteile nachträgliche Änderungen an anderen Stellen des Produkts noch zuzulassen.

## Patentansprüche

1. Computerimplementiertes Verfahren zur Herstellung eines Druckprodukts mit folgenden Verfahrensschritten:
a) Zuordnen von Informationen und/oder Inhalten von einem Auftraggeber in eine abstrakte Datenstruktur, welche mindestens eine Strukturebene mit mindestens einem Strukturelement umfasst, mittels einer Zuordnungseinheit einer ersten Steuerungseinheit
b) Speichern auf einem Datenträger und/oder Versenden mittels elektronischer Kommunikationsmittel der mit der abstrakten Datenstruktur verknüpften Informationen und/oder Inhalte und der abstrakten Datenstruktur an eine oder mehrere Druckereien, wodurch strukturierte Druckproduktdaten bezüglich der gewünschten Endprodukte entstehen oder zur Verfügung gestellt werden;
c) Umwandeln der strukturierten Druckproduktdaten mittels einer Umwandlungseinheit einer zweiten Steuerungseinheit in der Druckerei oder den Druckereien in ein Datenformat, das von dem dort eingesetzten operativen IT System in Fertigungsaufträge zur Herstellung umgesetzt werden kann, wobei die Umwandlungseinheit dazu ausgelegt ist, vorzugsweise automatisch das Datenformat zu erfassen ;
d) Bewertung der gelesenen Druckproduktdaten in dem IT System mittels einer Bewertungseinheit der zweiten Steuerungseinheit und Zuordnung zu den herstellenden Druckmaschinen und/oder zur Beschaffung der zur Herstellung erforderlichen Einsatzmaterialien mittels einer Zuordnungseinheit der zweiten Steuerungseinheit;
e) Nachbearbeiten des Herstellungsweges des Druckprodukts in textlich beschriebenen Sonderfällen, vorzugsweise mittels einer Eingabeeinheit der zweiten Steuerungseinheit;
f) wobei die Informationen und/oder Inhalte mit dem jeweils passenden Strukturelement verknüpft werden, sodass
g) die strukturierten Druckproduktdaten die für die technische Beschreibung des Druckprodukts in der Regel notwendigen Informationen und/oder Inhalte umfassen und
h) die ordnungsgemäße Übernahme an den Auftraggeber bestätigt wird durch Rückübertragung dieser Informationen und/oder Inhalte mittels einer der zweiten Steuerungseinheit zugehörigen Kommunikationseinheit,
**dadurch gekennzeichnet, dass**
i) die abstrakte Datenstruktur Strukturelemente enthält, die ein Druckprodukt ohne direkten Bezug zur Herstellung beschreiben und die abstrakte Datenstruktur eine Mehrzahl von Druckproduktarten abbildet,
weiterhin mit den Schritten
j) Übersenden eines Steuerungsbefehls auf der Grundlage der strukturierten Druckproduktdaten an die Druckmaschine durch die zweite Steuerungseinheit, und
k) Drucken eines Druckprodukts durch die Druckmaschine entsprechend des von der zweiten Steuerungseinheit empfangenen Steuerungsbefehls.

2. Verfahren nach Anspruch 1, **dadurch gekennzeichnet, dass** die Zuordnungseinheit der ersten Steuerungseinheit dazu ausgelegt ist, eine abstrakte Datenstruktur zu erzeugen, welche mindestens eine Projektebene und/oder Druckproduktebene oder Ausgabenebene und/oder Druckversionsebene und/oder Druckproduktteilebene und/oder Druckproduktseitenebene und/oder Druckproduktausstattungsebene und/oder Druckproduktfertigerzeugnisebene und/oder Versandebene als Strukturebene und mindestens ein Element je Ebene umfasst.

3. Verfahren nach einem der vorhergehenden Ansprüche, **dadurch gekennzeichnet, dass** das Umwandeln der strukturierten Druckproduktdaten mittels der Umwandlungseinheit der zweiten Steuerungseinheit in ein für die digitale Druckmaschine oder im Falle analogen Drucks, in ein für das digitale Vorstufensystem zur Druckformherstellung lesbares Datenformat teilautomatisch erfolgt.

4. Verfahren nach einem der vorhergehenden Ansprüche, **dadurch gekennzeichnet, dass** die Zuordnungseinheit der ersten Steuerungseinheit dazu ausgelegt ist, eine abstrakte Datenstruktur zu erzeugen, bei welcher eine erste Druckversionsebene unabhängig von einer zweiten Druckversionsebene ist.

5. Verfahren nach einem der vorhergehenden Ansprüche, **dadurch gekennzeichnet, dass** vor dem Übersenden des Steuerungsbefehls in Schritt j) und Drucken des Druckprodukts mit der Druckmaschine in Schritt k) die Verfahrensschritte a) bis d) und h) oder a) bis e) und h) mehrfach durchlaufen werden.

6. Verfahren nach einem der vorhergehenden Ansprüche, **dadurch gekennzeichnet, dass** die Zuordnungseinheit der ersten Steuerungseinheit dazu ausgelegt ist, eine abstrakte Datenstruktur zu erzeugen, in welcher eine Ausstattung mit einem Fertigerzeugnis oder auslieferfähigen Produkt und einer paginierten Seite verknüpft ist.

7. Verfahren nach einem der vorhergehenden Ansprüche, **dadurch gekennzeichnet, dass** die Zuordnungseinheit der ersten Steuerungseinheit dazu ausgelegt ist, eine abstrakte Datenstruktur zu erzeugen, in welcher gemeinsame Bestandteile von Druckversionen eines Druckprodukts definiert sind.

8. Druckprodukt, dass über ein Verfahren nach einem der vorhergehenden Ansprüche hergestellt ist.

9. Digitale Druckmaschine oder im Falle analogen Drucks, digitales Vorstufensystem zur Druckformherstellung, die oder das dazu ausgelegt ist, mit einem Verfahren nach einem der Ansprüche 1 bis 7 betrieben zu werden und eine Kommunikationseinheit aufweist, welche dazu ausgelegt ist, mit der zweiten Steuereinheit gemäß einem der vorhergehenden Ansprüche zusammenzuwirken.

10. System zur Herstellung eines Druckprodukts gemäß einem Verfahren nach einem der vorhergehenden Ansprüche, umfassend:
- die erste Steuerungseinheit, welcher ein erstes elektronisches Kommunikationsmittel zugeordnet ist;
- die zweite Steuerungseinheit, welcher ein zweites elektronisches Kommunikationsmittel zugeordnet ist; und
- eine Schnittstelle zwischen dem zweiten elektronischen Kommunikationsmittel und einer digitalen Druckmaschine oder einem digitalen Vorstufensystem zur Druckformherstellung nach Anspruch 9,
wobei die Schnittstelle dazu konfiguriert ist, die empfangenen oder aus den empfangenen Daten gewonnenen strukturierten Druckproduktdaten in für die digitale Druckmaschine oder im Falle analogen Drucks, in für das digitale Vorstufensystem zur Druckformherstellung oder für das diese Anlagen ansteuernde IT System der Druckerei lesbare Druckproduktdaten umzuwandeln und weiterhin dazu konfiguriert ist, die lesbaren Druckproduktdaten an die digitale Druckmaschine oder im Falle analogen Drucks, an das digitale Vorstufensystem zur Druckformherstellung oder an das diese Anlagen ansteuernde IT System der Druckerei zu übersenden.

11. System nach Anspruch 10, **dadurch gekennzeichnet, dass** die erste Steuerungseinheit eine Zuordnungseinheit aufweist, welche dazu ausgelegt ist, Informationen und/oder Inhalte von einen Auftraggeber einer abstrakten Datenstruktur zuzuordnen.

12. System gemäß Anspruch 10 oder 11, **dadurch gekennzeichnet, dass** die zweite Steuerungseinheit dazu ausgelegt ist, die strukturierten Druckdaten teilautomatisch oder vollautomatisch in ein für die digitale Druckmaschine oder im Falle analogen Drucks, in ein für das digitale Vorstufensystem zur Druckformherstellung lesbares Datenformat umzuwandeln und einen Steuerungsbefehl auf der Grundlage der strukturierten Druckproduktdaten an die Druckmaschine zu übersenden.
